(19) Europäisches Patentamt European Patent Office Office européen des brevets

(11) **EP 4 769 227 A1**

(12) **EUROPEAN PATENT APPLICATION**

(43) Date of publication:
**01.07.2026 Bulletin 2026/27**

(21) Application number: **25226231.6**

(22) Date of filing: **22.12.2025**

(51) International Patent Classification (IPC):
*G06N 3/0495* (2023.01)

(52) Cooperative Patent Classification (CPC):
**G06N 3/0495**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.12.2024 US 202463740728 P**
**01.08.2025 US 202519288530**
**21.08.2025 PCT/CA2025/051098**
**11.12.2025 US 202519417302**
**16.12.2025 PCT/CA2025/051692**

(71) Applicant: **Multiverse Computing Inc.**
**Toronto, ON M5C 2T2 (CA)**

(72) Inventors:
• **GENUARDI OQUENDO, Alessandro Daniele**
**Toronto, ON, M5C 2T2 (CA)**
• **SINHA, Nilotpal Kanti**
**Toronto, ON, M5C 2T2 (CA)**
• **WIRJADI, Oliver**
**Toronto, ON, M5C 2T2 (CA)**
• **MUGEL, Samuel**
**Toronto, ON, M5C 2T2 (CA)**
• **ORUS, Roman**
**Toronto, ON, M5C 2T2 (CA)**

(74) Representative: **Balder IP Law, S.L.**
**Paseo de la Castellana 93**
**5ª planta**
**28046 Madrid (ES)**

(54) **SYSTEM AND METHOD FOR DECISION-MAKING IN HARDWARE SYSTEMS USING QUANTUM-INSPIRED COMPRESSED MODELS**

(57) Reliance on cloud-based decision-making presents several challenges. To address at least some of these technical challenges, an example system is provided. The system includes an edge computing device including a decision-making model. The system also includes at least one local sensor coupled to the edge computing device through a localized network, wherein the at least one local sensor is disposed in a physical environment. The system also includes at least one local device coupled to the edge computing device through the localized network, wherein the at least one local device is disposed in the physical environment. The edge computing device is configured to: receive, from the at least one local sensor, image data associated with the physical environment; determine, responsive to the image data, a state associated with the physical environment using the decision-making model; and determine, based on the state, an instruction for the at least one local device.

FIG. 7

**EP 4 769 227 A1**

**Description**

FIELD

The embodiments described herein generally relate systems and methods for decision-making in hardware systems using quantum-inspired compressed models.

BACKGROUND

The following paragraphs are provided by way of background to the present disclosure. They are not, however, an admission that anything discussed therein is prior art or part of the knowledge of persons skilled in the art.

Sensor data is commonly used by systems to determine an action for a system. For example, sensor data can be used by vehicles to alert a driver of the presence of an object such as another vehicle. Similarly, sensor data can be used by self-driving vehicles to enable the self-driving vehicles to stay within a lane. Typically, sensor data is collected and transmitted externally via an internet connect to a model trained to identify an action to be taken by the system based on the sensor data.

A common approach in decision-making systems is to transmit sensor data from edge devices (e.g., cameras, LiDAR sensors, and embedded processors) to remote servers that execute complex machine learning models. These models, often based on deep learning architectures, process incoming data and return a decision to the hardware system. This cloud-based approach enables high-accuracy decision-making, as large-scale models with high computational requirements can be utilized.

However, reliance on cloud-based decision-making presents several challenges. For example, transmitting large volumes of sensor data introduces latency, which can be detrimental in mission-critical applications such as autonomous driving, satellite navigation, and defense systems. As another example, if network connection is lost or disrupted, a system may fail to receive timely decisions, leading to operational failures or safety risks. As a further example, real-time processing on remote servers requires significant energy consumption and computational resources, making it unsuitable for power-constrained environments such as spacecraft or battery-operated industrial systems.

To mitigate these challenges, some existing systems incorporate local processing units that perform basic pre-processing of sensor data before transmission. For example, in automotive applications, onboard processors may filter and compress raw sensor data before sending it to a cloud-based decision-making system. However, these local processing units typically lack the computational power to run full-scale machine learning models, limiting their ability to make autonomous decisions without external assistance.

Therefore, there is a need for a hardware system that can efficiently perform decision-making.

SUMMARY OF VARIOUS EMBODIMENTS

Various embodiments of a quantum-inspired system and method decision-making in hardware systems using quantum-inspired compressed models.

The solutions described herein recite methods and systems for a self-contained, offline decision-making system which may not require any Internet connectivity to make decisions. The methods and systems may be voice-controlled.

An example decision-making system may enable natural language interaction with users and perform contextual reasoning based on local sensor data. The system may be powered by a highly compressed language model optimized for AI inference accelerators (e.g., Neural Processing Units), allowing complex decision-making without reliance on cloud services. Through a localized protocol, the system may interface with and control various connected devices, ranging from home appliances to vehicles to industrial equipment, and may act as a central decision engine for sensor-driven automation. This system architecture may ensure privacy, reliability, and extensibility across multiple domains. Relevant application examples may include, for example, the detection of an unlocked parked car or an empty house with a burning stove. This architecture may also allow the decision-making system to be used for safety applications in environments where privacy is relevant and sensor data is available. In some embodiments, the decision-making system may include one or more agents which may communicate with one or more compressed large language models (LLMs). The one or more agents may function without any Internet connectivity. An agent may also be referred to as an assistant.

The solution described herein may include an offline-first cyber-physical system that integrates a compressed reasoning-capable language model with a natural language interface and a local device control protocol. For example, it may utilize an LLM that has been highly optimized via compression and hardware-specific adaptation to run efficiently on AI inference accelerators (e.g., AIPUs/NPUs) embedded within one or more edge devices.

The decision-making system may process sensor inputs from its environment (e.g., motion detectors, vehicle data, smart appliances) and perform real-time contextual reasoning to determine actions without requiring Internet connectivity. It may communicate with the user through natural spoken dialogue and with connected endpoint devices via local protocols (e.g., Bluetooth™, CAN bus, Zigbee, etc.).

The decision-making system may act as the central "brain," while the controlled devices may function as "hands," responding to inferred decisions derived from a combination of environmental sensing and intent recognition. Unlike conventional assistants, which rely on fixed command trees or cloud Application Programming Interfaces (APIs), this invention enables flexible, situational decision-making entirely on-device, enhancing privacy, autonomy, and responsiveness.

The modular design may also allow the system to function in diverse settings, such as homes, vehicles, industrial plants, transforming otherwise "dumb" devices into coordinated systems that respond to both human language and environmental stimuli in real time.

The decision-making system may be able to reason about the state of a system and detect situations which may require it to act, such as by sending messages into the network. The decision-making system may be able to interact with humans by voice output and input. The decision-making system may have full autonomy, which may allow it to integrate into safety/security-relevant environments (e.g., industry, vehicles, homes). By using LLM-based reasoning, the decision-making system may be able to detect (or be implemented in) situations in which it has not been specifically programmed or trained. By having an LLM-based voice interface and/or LLM-based network interface, it may be integrated into any existing bus or network system without modifying the system or network.

In a vehicular environment, a vehicle may be equipped with the offline assistant, which may use onboard sensors (e.g., GPS, accelerometers, OBD-II diagnostics) and the embedded LLM to make decisions without cloud access. For instance, if the vehicle is involved in a minor collision in a remote area without connectivity, the assistant may infer the severity, verbally guide passengers through first aid steps, and suggest navigating to the nearest service station using offline maps. It may also analyze driving behavior, anticipate mechanical issues, and alert the driver verbally based on real-time reasoning across multiple data streams, all with no dependency on Internet access.

In a manufacturing environment such as a manufacturing facility, the voice assistant may be deployed on edge hardware connected to machinery and worker safety sensors, such as, vibration monitors, thermal sensors, and RFID-based personal protective equipment (PPE) checks. The assistant may monitor input patterns and may reason about abnormal conditions, such as overheating equipment or missing safety gear. Upon detecting a potential hazard, the system may take proactive action (e.g., issue shutdown commands, prompt workers to step back) and may verbally communicate safety warnings or maintenance instructions, ensuring continuity and safety even in disconnected environments.

In a residential setting, the assistant may operate as a fully offline, privacy-preserving home automation controller. Connected to motion sensors, door locks, appliance smart plugs, and environmental monitors, the system may perform contextual reasoning to ensure safety and energy efficiency. For example, if the system detects that an occupant has left the house (e.g. via a door sensor and geolocation) but the stove remains on, lights are active, and the front door is unlocked, the assistant may infer a potential oversight. The system may then proceed to turn off unnecessary appliances, lock the door, and verbally notify the occupant upon detecting the return of the occupant, or via a connected local interface (e.g., over Bluetooth). Unlike traditional systems that require cloud-based routines, this assistant may perform all decision-making locally, even in homes without Internet access.

In accordance with an aspect of this disclosure, there is provided a system including: an edge computing device comprising a decision-making model; at least one local sensor coupled to the edge computing device through a localized network, wherein the at least one local sensor is disposed in a physical environment; at least one local device coupled to the edge computing device through the localized network, wherein the at least one local device is disposed in the physical environment; and wherein the edge computing device is configured to: receive, from the at least one local sensor, image data associated with the physical environment; determine, responsive to the image data, a state associated with the physical environment using the decision-making model; and determine, based on the state, an instruction for the at least one local device.

In some embodiments, the edge computing device includes at least one large language model (LLM), and the at least one LLM is compressed to reduce its size.

In some embodiments, the at least one LLM includes an LLM voice interface configured to receive, from the at least one local sensor, audio data associated with the physical environment and extract voice data from the audio data, and determining the state associated with the system is further based on the voice data.

In some embodiments, the at least one LLM includes an LLM network interface configured to communicate with the at least one local sensor and the at least one local device over the localized network.

In some embodiments, the state associated with the physical environment includes at least one of a current configuration of the at least one local device, a predicted configuration of the at least one local device, a current change associated with the physical environment, a predicted change associated with the physical environment, a current safety incident associated with the physical environment, or a predicted safety incident associated with the physical environment.

In some embodiments, the edge computing device is further configured to transmit the instruction to the at least one local device.

In some embodiments, the image data describes one or more people or objects located in the physical environment, and determining the state associated with the system is based on identifying the one or more people or objects.

In some embodiments, the at least one local sensor includes at least one of a microphone, a camera, a pressure sensor, a gyroscope, an accelerometer, a motion sensor, a vibration monitor, a thermal sensor, or a temperature sensor.

In some embodiments, the at least one local device includes at least one of a vehicle component, a household device, a controller, machinery or a sensor.

In some embodiments, the at least one local device includes a speaker, and the speaker transmits an audio output in response to the instruction.

In some embodiments, the localized network is temporarily connected to an external network for the edge device to retrieve updates for the decision-making model.

In accordance with another aspect of this disclosure, there is provided a method including: receiving, at an edge computing device, image data associated with a physical environment, wherein the image data is received from at least one local sensor coupled to the edge computing device through a localized network, and wherein the at least one local sensor is disposed in the physical environment; determining, responsive to the image data, a state associated with the physical environment using a decision-making model; and determining, based on the state, an instruction for at least one local device, wherein the at least one local device is coupled to the edge computing device through the localized network, and wherein the at least one local device is disposed in the physical environment.

In some embodiments, the edge computing device includes at least one large language model (LLM), and the at least one LLM is compressed to reduce its size.

In some embodiments, the at least one LLM includes an LLM voice interface configured to receive, from the at least one local sensor, audio data associated with the physical environment and extract voice data from the audio data, and wherein determining the state associated with the system is further based on the voice data.

In some embodiments, the at least one LLM includes an LLM network interface configured to communicate with the at least one local sensor and the at least one local device over the localized network.

In some embodiments, the state associated with the physical environment includes at least one of a current configuration of the at least one local device, a predicted configuration of the at least one local device, a current change associated with the physical environment, a predicted change associated with the physical environment, a current safety incident associated with the physical environment, or a predicted safety incident associated with the physical environment.

In some embodiments, the image data describes one or more people or objects located in the physical environment, and determining the state associated with the system is based on identifying the one or more people or objects.

In some embodiments, the at least one local device includes at least one of a vehicle component, a household device, a controller, machinery or a sensor.

In some embodiments, the at least one local device includes a speaker, and the speaker transmits an audio output in response to the instruction.

In accordance with another aspect of this disclosure, there is provided one or more non-transitory computer readable media with computer-executable instructions stored thereon that, when executed by at least one computer, cause the at least one computer to perform a method including: receiving, at an edge computing device, image data associated with a physical environment, wherein the image data is received from at least one local sensor coupled to the edge computing device through a localized network, and wherein the at least one local sensor is disposed in the physical environment; determining, responsive to the image data, a state associated with the physical environment using a decision-making model; and determining, based on the state, an instruction for at least one local device, wherein the at least one local device is coupled to the edge computing device through the localized network, and wherein the at least one local device is disposed in the physical environment.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

## BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.

FIG. 1A is a block diagram of an example hardware system, in accordance with an embodiment;

FIG. 1B is a block diagram of an example system processor of the example hardware system of FIG. 1A, in accordance with an embodiment;

FIG. 2 is a flowchart of an example method for decision-making for a hardware system, in accordance with an embodiment;

FIG. 3A is a flowchart of an example method for compressing a large language model (LLM) that may be used for decision making, in accordance with an embodiment;

FIG. 3B is a flowchart of an example method for compressing a large language model (LLM) that may be used for decision making, in accordance with an embodiment;

FIG. 4 shows an example tensor representation of an initial weight matrix, a corresponding tensor star and the corresponding tensor network;

FIG. 5 shows an example tensor decomposition of a tensor;

FIG. 6 is a block diagram depicting a decision-making system interacting with a physical environment;

FIG. 7 is a block diagram of the decision-making system of FIG. 6, according to some embodiments;

FIG. 8 is a block diagram of the edge computing device of FIG. 7, according to some embodiments;

FIG. 9 is a block diagram of the compressed LLM of FIG. 8, according to some embodiments;

FIG. 10 is a block diagram depicting types of local sensors which may be used in the decision-making system of FIG. 7, according to some embodiments;

FIG. 11 is a block diagram depicting example types of sensor data which may be captured by the decision-making system of FIG. 7, according to some embodiments;

FIG. 12 is a block diagram depicting example audio data, according to some embodiments;

FIG. 13 is a block diagram depicting example image data, according to some embodiments;

FIG. 14 is a flow diagram depicting of using the edge computing device of FIG. 7;

FIG. 15 is a block diagram depicting a state used in the flow diagram of FIG. 14, according to some embodiments;

FIG. 16 is a block diagram of a computing device, according to some embodiments;

FIG. 17 depicts a method for using the decision-making system of FIG. 7, according to some embodiments;

FIG. 18 depicts another method for using the decision-making system of FIG. 7, according to some embodiments ;

FIG. 19 is a block diagram depicting an example of the decision-making system of FIG. 7 implemented in a residential environment, according to some embodiments;

FIG. 20 is a block diagram depicting an example of the decision-making system of FIG. 7 implemented in a vehicular environment, according to some embodiments; and

FIG. 21 is a block diagram depicting an example of the decision-making system of FIG. 7 implemented in an industrial environment, according to some embodiments.

Further aspects and features of the example embodiments described herein will appear from the following description taken together with the accompanying drawings.

## DETAILED DESCRIPTION OF THE EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object-oriented programming. The program code may be written in C++, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

Sensors are widely used to collect data about the environment in which a system operates. Once collected, sensor data can be analyzed to determine a state of the system and in some cases, to make a decision for the system.

Existing systems collect sensor data locally and transmit the collected sensor data to an external system configured to analyze and make predictions about or based on the sensor data. In these systems, the collected sensor data is typically pre-processed by at least one controller, or directly transmitted to external/remote devices without pre-processing. Typically, this data transmission is accomplished over the internet. However, these systems can fail to return a decision when the system loses internet connectivity. The loss of connectivity can be particularly disadvantageous and, in some cases, dangerous, when the system is used in mission-critical applications.

In automotive applications for example, cameras and/or other sensors located on the vehicle typically collect data about the vehicle's environment. This data must be analyzed within milliseconds to determine an action (e.g., steering, alerting the driver) for the vehicle to ensure the vehicle's safety. Typically, the collected data is transmitted to a remote server for analysis using deep learning models such as large language models (LLMs). However, interruptions in network connectivity can lead to the vehicle failing to receive the necessary instructions in time to safely make a decision for the vehicle.

Conventional real-time processing typically also requires dedicated processors that require significant computational resources and have high energy and processing requirements, making real-time processing typically unsuitable for environments that have space constraints or have limited computational resources. In automotive applications for example, vehicles typically do not have the necessary processing resources to process large volumes of complex data.

The described embodiments enable a hardware system to make decisions locally, without accessing an internet cloud connection. The described embodiments can be used for making operation critical decisions. The described embodiments can be used in applications involving operation critical decisions, including, but not limited to self-driving vehicles, satellite-based communications and defense systems.

The described embodiments can use compressed decision-making models, enabling the models to be deployed on hardware processors having limited memory. The described embodiments enable sensor data to be analyzed and decisions to be made based on the sensor data in real-time, allowing for rapid decision-making in applications where timely responses are preferable or necessary, such as, but not limited to, autonomous vehicles or military operations. By processing and acting on information locally, the described embodiments can reduce latency and increase reliability, particularly in remote or contested environments where cloud connectivity is not available or is unreliable.

Some of the embodiments described herein can employ a combination of offline and online processing. For example, the embodiments described can transmit data for online processing when a stable internet connection is available and process data locally, in an offline manner when the internet connection is unstable or unavailable.

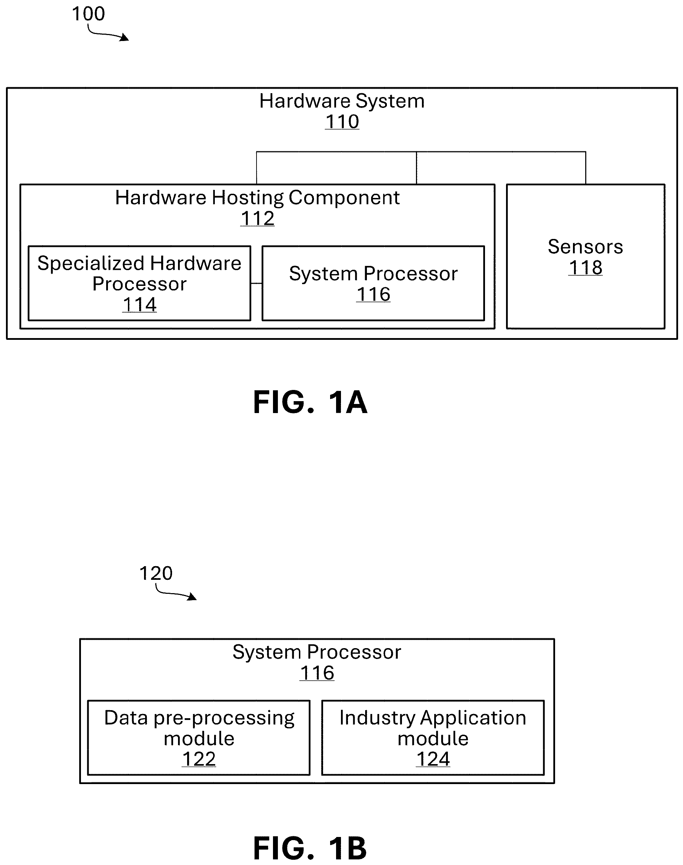

Referring first to FIG. 1A, shown therein is a block diagram 100 of a hardware system for which decisions can be determined. The hardware system 110 can be a system that can operate offline i.e., a system that lacks an internet connection or that can function without an internet connection. For example, the hardware system 110 can be operated in environments where internet connectivity is unreliable or does not exist.

The hardware system 110 can be a hardware system of any physical system or device for which a decision can be made and which can implement the decision, for example, a hardware system for ship, a satellite, a self-driving vehicle.

As described, the hardware system 110 can be a hardware system for self-driving vehicle. As the self-driving vehicle drives on the road, the self-driving vehicle may encounter environments with poor network connectivity (e.g., a tunnel, a remote region). The embodiments described herein can enable a self-driving vehicle to make decisions in real-time, even when the self-driving vehicle is in an environment with poor network connectivity, enhancing the reliability of self-driving vehicles.

The hardware system 110 includes a hardware hosting component 112, a system processor 116 and sensors 118. The hardware hosting component, the system processor 116 and the sensors 118 can communicate with each other via a hardware interaction module (not shown).

The hardware hosting component 112 can be a physical component for housing one or more specialized hardware processors 114 and one or more system processors 116. In some embodiments, the hardware hosting component 112 can house additional components (e.g., power module, memory). In other embodiments, the hardware hosting component 112, only houses the specialized hardware processors 114 and the additional components and the system processor 116 are housed on one or more separate components. The form factor and/or the materials used for constructing the hardware hosting component 112 can vary depending on the application of the hardware system 110. For example, if the hardware system 110 is used in a satellite, the hardware hosting component 112 can be made of materials that can withstand the vacuum of space. As another example, if the hardware system 110 is used in maritime applications, the hardware hosting component 112 can be made of materials resistant to saline conditions.

The specialized hardware processor (s)114 can be a low-memory hardware processor 114 configured for performing specific tasks and having a small footprint. For example, the specialized hardware processor(s) 114 can be a field programmable array (FPGA), a graphical processing unit (GPU), a central processing unit (CPU) or other classical processor, a tensor processing unit (TPU), a neural processing unit (NPU), or an analog chip. The type(s) of the specialized hardware processor(s) can vary depending on the application of the hardware system 110, including the performance required for the application of the hardware system 110, the energy constraints of the hardware system 110 and/or the environmental requirements of the hardware system 110. For example, if the hardware system 110 requires energy efficiency, the specialized hardware processor 114 can be an analog chip. As another example, if the hardware system 110 requires a faster response time, such as when the hardware system 110 needs to make decisions in real-time, the specialized hardware processor 114 can be an analog chip. As another example, if the hardware system 110 requires frequent reconfiguration, the specialized hardware processor 114 can be an FPGA. In some embodiments where the specialized hardware processor(s) 114 include at least one FPGA, the at least one FPGA is configured to run a compressed decision-making model, which may comprise one or more quantum-inspired tensor networks. Running a compressed decision-making model can increase the processing speed at which the FPGA can process data.

The hardware hosting component 112 can house various specialized hardware processors 114 and each specialized hardware processor 114 can be configured to implement a decision-making model. For example, a first specialized hardware processor 114 can be used to implement a decision-making model for determining a decision based on temperature data and a second specialized hardware processor 114 can be used to implement a decision-making model for determining a decision based on image analysis.

The specialized hardware processor 114 can be an existing processor of the hardware system 110. For example, in some embodiments, the system or device on which the hardware system resides 110 may not require modifications to implement the embodiments described herein.

The system processor 116 can be implemented with any suitable processor, controller, digital signal processor, graphics processing unit, application specific integrated circuits (ASICs), and/or field programmable gate arrays (FPGAs) that can provide sufficient processing power for the configuration, purposes and requirements of hardware system 110. The system processor 116 can include more than one processor and each processor can be configured to perform different dedicated tasks. The system processor 116 can be configured to pre-process sensor data received from the sensors 118 and implement a decision determined by a decision-making model deployed on the specialized hardware processor 114.

As shown in FIG. 1B, which shows a block diagram 120 of the system processor 116, the system processor 116 can implement a data pre-processing module 122, configured to pre-process sensor data received from the sensors 118. The data pre-processing module 122 can process sensor data from each sensor 118 separately or can process sensor data from two or more sensors 118 together. The data pre-processing module 122 can employ one or more trained models to pre-process the sensor data.

The system processor 116 can implement an industry application module 124, configured to implement the decision determined by the decision-making model. For example, the industry application module 124 can receive the decision determined by the decision-making model and determine a response for the hardware system 110 or a response for a system external to the hardware system 110. The response can be a physical action. For example, based on sensor data indicating the presence of an obstacle on the road, the decision-making model can determine that a self-driving vehicle should come to a stop. The industry application module 124 can determine that coming to a stop requires the application of brakes and generate a braking command for the braking system of the self-driving vehicle.

As another example, in defense applications, based on the modulation scheme, the amplitude and/or the frequency of incoming signals (e.g., radar signals, communication signals), a defense system can determine that the incoming signals are associated with an enemy system and the decision-making model can determine that a missile system should be engaged. The industry application module 124 can determine that engaging a missile system requires the activation of actuators and generate a command to activate the actuators.

As a further example, based on sensor data indicating that the frequency band of a radio signal, the decision-making model can determine that signals received by a satellite should be routed to a given ground station. The industry application module 124 can generate a command to route the signals to the identified ground station.

The sensors 118 can be any type of sensors that can be used to sense data about the environment of the hardware system 110. For example, the sensors 118 can include temperature sensors for measuring temperature data, pressure sensors for measuring pressure data, motion sensors for measuring motion data, one or more cameras capturing images.

The sensors 118 can vary depending on the application of the hardware system. For example, a hardware system 110 used for climate monitoring can include temperature sensors collecting temperature data. As another example, a hardware system used in defense applications can include a camera capturing images.

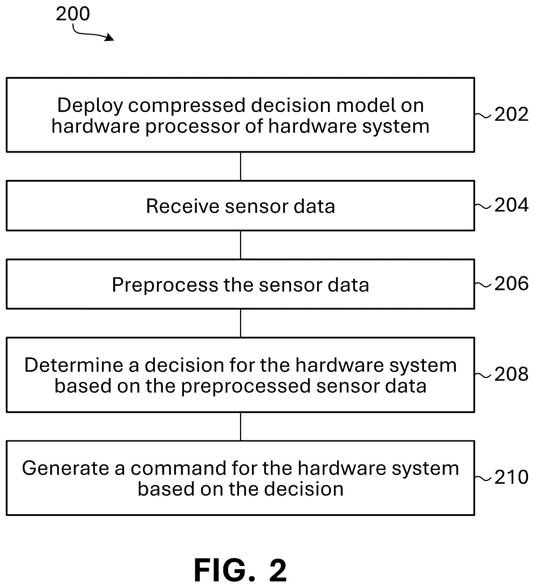

Referring next to FIG. 2, shown therein is a flowchart 200 of a method for decision-making for hardware systems using quantum-inspired compressed models. The method 200 can be implemented on the hardware system 110.

At 202, a compressed decision-making model is deployed on the specialized hardware processor 114 of the hardware system 110. As explained the specialized hardware processor 114 can be a processor having limited memory, for example a field programmable gate array (FPGA) or an analog chip. The type of specialized hardware processor 114 used can vary, depending on the application of the hardware system 110. For example, an analog chip is well suited for processing signals that represent continuous variations in physical phenomena and accordingly can be used in applications where temperature is being monitored. As another example, an FPGA is well suited for complex computations and accordingly can be used in applications involving image analysis.

The decision-making model can include one or more trained large language models (LLM) that have been compressed to reduce their size. The LLM(s) can include self-attention layers or multi-perceptron layers. The LLM(s) can be compressed using tensor network methods inspired by quantum computing, which can reduce the size of the LLM(s) while minimally impacting the performance of the LLM(s). Quantum-inspired tensor network compression methods involve reconfiguring the weight matrices of different deep layer modules of a deep learning model as tensor networks, which compress the correlation space of the model by keeping only those correlations that are relevant to describe the model and discarding the rest of the correlations. Other compression techniques that can be applied include quantization by reducing the floating-point accuracy of numbers, distillation by removing layers from the model, pruning by removing specific neurons, and low-rank approximations of weight matrices.

By compressing the LLM(s), the embodiments described herein can reduce memory requirements associated with storing and executing a decision-making model and can enable the decision-making model to be deployed on hardware with limited memory capacity, such as an FPGA or an analog chip. By deploying compressed LLM(s) on a processor of the hardware system 110, the hardware system 110 can make offline decisions, without requiring a network connection, or when the network connection is unstable. For example, in some embodiments, a decision-making model deployed on the specialized hardware processor 114 may be used when the internet connection is unstable or unavailable and a decision-making model implemented on a remote system may be used when the network connection is stable.

The decision-making model can be pre-trained prior to being deployed on the specialized hardware processor 114. The decision-making model can be saved on a memory of the hardware system 110.

The decision-making model can be a trained model, trained for making decisions according to the application of the hardware system. For example, the decision-making model can be a model trained to determine a risk of collision based on sensor data. In some embodiments, the decision-making model includes multiple models.

In some embodiments, the decision-making model is a pre-trained model that is compressed via pruning and healing method. Pruning and healing to reduce the size of the decision-making model can involve identifying groups of contiguous neural network layers of the decision-making model that share a common dimension and that must be pruned together based on a dependency graph; selecting a key layer from each identified group to set a compression rate limit, wherein the first layer of each group is selected as the key layer; applying Singular Value Decomposition (SVD) to a weight matrix of the selected key layer to decompose the matrix into orthogonal matrices and a diagonal matrix of singular values; truncating singular values based on predefined thresholds, including absolute, relative, and cumulative discarded weight thresholds, to determine a maximum compression rate; ranking and identifying less important weight channels within the weight matrix based on similarity measures and importance scores; and removing the identified less important channels from all layers in the pruning group while preserving the shared dimension.

The decision-making model can be compressed according to the application of the hardware system 110. For example, portions of the LLM that are not relevant to tasks and actions performed by the hardware system 110 can be removed from the decision-making model. As another example, the compression scheme can vary depending on the application.

In at least one embodiment where the LLM has multiple layers, the LLM can be compressed by removing one or more layers, based on the application of the hardware system 110. For example, if the LLM is configured for deployment on multiple different systems (e.g., vehicle, aircraft, satellite) but will be deployed on a specific system, information relating to other systems can be removed from the LLM. In such cases, the LLM can be retrained using a retraining module, wherein the retraining results in an uncorrelated output, and compressed using a tensorization module, wherein the compression uses tensor networks.

The processor can implement a tensorization module that compresses the decision-making model using mathematical structures.

The decision-making model can be configured to be compatible with the architecture of the hardware processor 114.

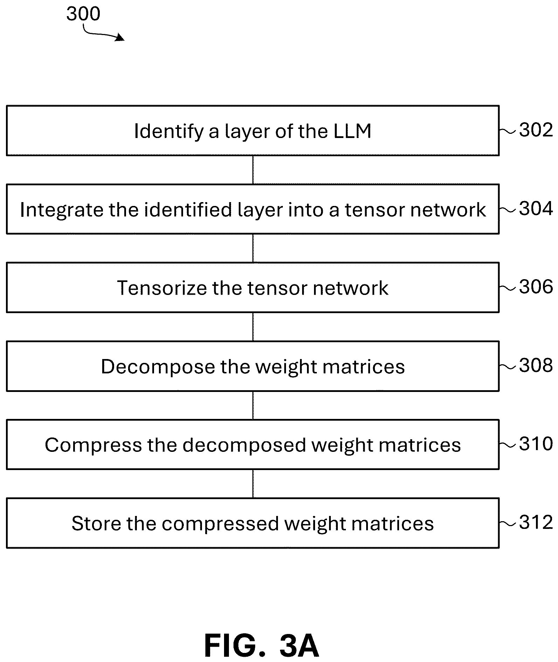

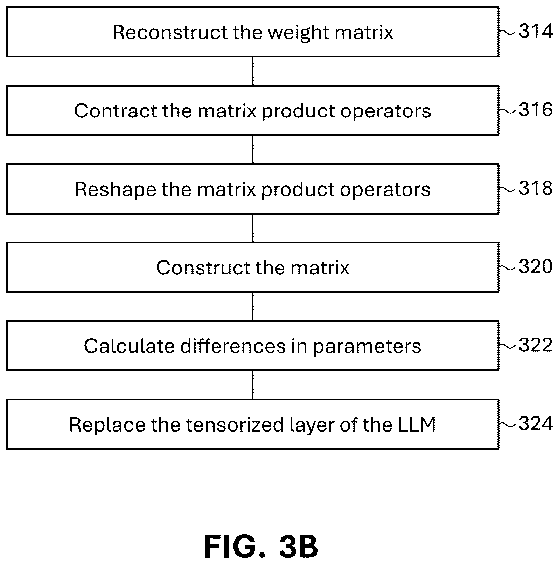

The decision-making model can be compressed according to the method 300 shown in FIGS. 3A-3B, though it will be understood that the decision-making model can be compressed using other techniques. The decision-making model can be one or more LLMs having a plurality of layers and corresponding weight matrices. The method 300 can be implemented by a processor external to the hardware system 110.

At 302, the processor identifies an initial layer of the LLM and a corresponding weight matrix. The choice of the identified initial layer can be arbitrary.

The LLM may include a plurality of layers which can be represented by a corresponding weight matrix, the from of which may vary depending on the type of layer. For example, fully connected layers may be represented by a single weight matrix of dimension m x n that corresponds input vectors of size n to output vectors of size m. In some examples, layers may be represented by more than one layer. For example, the LLM may include attention layers, which may be represented by a plurality of matrices that represent, for example, queries, keys, values, and output projections.

Optionally, the identified initial layer may be a layer that is mathematically suitable to be represented in the form of a weight matrix. For example, the initial layer may be a fully connected layer, a convolutional layer, a recurrent layer, an attention layer, or any other layer in which one or more linear operations is applied.

In one non-limiting example, the LLM may be the *Llama-2-7b-hf* model, but it will be understood that other similar foundation models may be used. The *Llama-2-7b-hf* model is a fine-tuned generative text model with (currently) 7 billion parameters. The *Llama-2-7b-hf* model may be optimized for dialogue use cases and may be converted into Hugging Face Transformers format. The Hugging Face transformers may be obtained from the Hugging Face community at the following website: huggingface.co. The *Llama-2-7b-hf* module is part of the Llama-2 family of large language models (LLMs), which includes pretrained and fine-tuned generative text models ranging in scale from 7 billion to 70 billion parameters. The *Llama-2-7b-hf* model has self-attention layers and multi-perceptron layers with weight matrices that can be tensorized as explained below.

At 304, the processor integrates the identified initial layer of the LLM into layers of a tensor network (i.e., recycles or upgrades layers of the LLM).

A tensor is a multi-dimensional array represented by $T_{\alpha\beta\gamma}$ that describes a multilinear relationship between sets of algebraic objects related to a vector space. The subscripts $\alpha\beta\gamma$ denote the tensor dimensions (in this case 3 dimensions, as there are three subscripts) and this value is termed the "rank" of the tensor. The tensors can map between different objects such as vectors, scalars, and other tensors. There are many types of tensors, including scalars and vectors, dual vectors, multilinear maps between vector spaces, and dot product operation. The tensors are defined independent of any basis.

At 306, the processor tensorizes the tensor network. Tensorization is the process of transforming or mapping lower-order data to higher-order data. For example, the low-order data can be a vector, and the tensorized result can be a matrix, a third-order tensor (i.e., rank three), or a higher-order tensor. The low-order data can also be a matrix or a third-order tensor. Tensorization can be used to compress data and/or reduce the complexity of data while preserving initial features of the data. By tensorizing the tensor network, the size of the decision-making model can be reduced.

The processor can tensorize the tensor network by determining a representation of the weight matrix of the tensor network. The weight matrix can be stored in memory. In machine learning, a weight matrix is a matrix of numerical values that represent the strength of the connections between nodes in the layer of the neural network of the LLM. The numerical values are used to transform the input data from the input sequence within the neural network's hidden layers. For example, when the input data enters a node in the neural network, the input data is multiplied by a weight value. The resulting output from the node is either observed or passed to the next layer in the neural network. The weight matrix is typically contained within the hidden layers of the neural network. The weight matrix is adjusted during training of the neural network to improve the accuracy of the language model's predictions.

Tensor neural networks (TNN) and tensor convolutional neural networks (TCNN) are examples of deep neural networks (NN) in which the weight matrices of the hidden layers of the large language model can be replaced by tensor network structures created using factorization techniques, for example, singular value decomposition (SVD). SVD and other factorization techniques can help achieve a balance between compression and accuracy, since SVD and other factorization techniques can efficiently reduce the number of parameters in a model while preserving accuracy. By replacing the weight matrices of hidden layers with tensor network structures, the size of the LLM can be reduced, allowing the LLM to be deployed onto the hardware system 110.

Tensor neural networks have better performance and accuracy than standard deep neural networks for reducing parameter space and thus the amount of storage required to store the LLM. In tensor neural networks, the tensorization takes place only at the level of the hidden layers (e.g., trainable weights). Training of a large language model can be performed by a processor by optimizing the contracted trainable weight matrices of the layers based on standard optimization techniques, for example gradient descent and/or automatic differentiation.

An efficient representation of weight matrices can be obtained by replacing the weight matrices of a large language model using Matrix Product Operators (MPO) having a bond dimension $\chi$. The MPOs are created by executing sequential Singular Value Decompositions (SVDs) on the weight matrices and retaining the largest $\chi$ singular values at each SVD. The replaced weight matrices for a new tensorized layer which has several trainable weights are then represented by the MPO. The resulting TNN is scalable and can have any desired number of TN layers to form a deep neural network.

At 308, the processor decomposes the weight matrices obtained at 306 into a tensor network structure. Decomposing the weight matrices can involve creating a tensor star formed from a plurality of tensors, the plurality of tensors having a smaller dimension than the weight matrices.

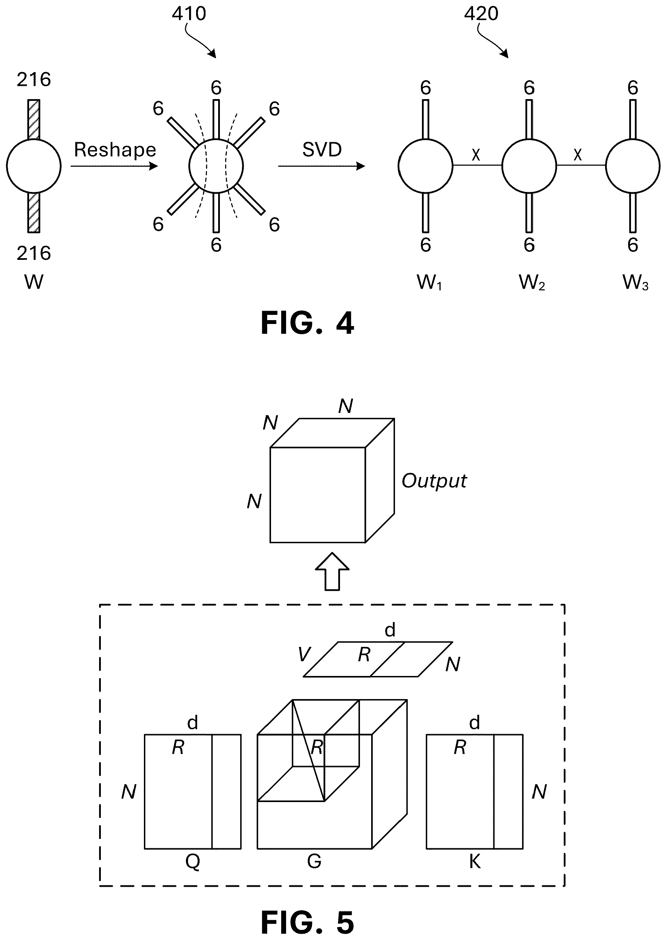

FIG. 4 shows a tensor representation of an initial weight matrix W which has a dimension of 216 x 216 to illustrate this point. It will be appreciated that the value 216x216 is merely illustrative and not limiting of the invention. The initial two dimension of the weight matrix are split into smaller dimensions, as shown by the "tensor star" 410, whereby the product of the smaller dimensions is equal to the initial dimension. The tensor star 410 is then converted by two sequential SVDs to form the resulting tensor network 420 of $2\times36\chi+36\chi^2$ parameters, amounting to the sum of parameters of each tensor, with $\chi$ being the MPO bond dimension serving as a truncation parameter. In the diagrammatic representation of MPOs shown in FIG. 4, circles represent individual ones of the tensors, lines indicate the tensor indices and lines connecting circles represent contracted shared indices between the tensors.

It will be appreciated that there are an infinite number of possibilities to decompose the weight matrix W into "the tensor star" 410 shown and then into the tensor network 420. However, not all of the possibilities will lead to an efficient decomposition. In order to reduce the number of possibilities for the tensor decomposition, a number of core tensors is adapted to each training model task. For example, a number of the core tensors can be programmed in advance, set, or decided by a user of the training model.

For example, the core tensors can be compressed tensors that are used in a Tucker decomposition of a larger tensor, as shown in FIG. 5. FIG. 5 shows blocks representing a query matrix Q, a key matrix K as well as a value matrix V of the LLM. The query matrix Q and the key matrix K are derived from the input sequence to the LLM. The key matrix K represents the relation strength of the words in the input sequence. The value matrix V is calculated from the query matrix Q and the key matrix K to be used as the output. In FIG. 5, it is assumed that the matrices are three factor matrices which are composed of three groups of orthogonal basis vectors. R is the rank of the tensor and N is the length of the input sequence. The dimension of the matrices is given by d. The new single block attention is the core tensor G.

Tucker decomposition is a low-rank decomposition method that involves decomposing a tensor network into a set of matrices and one small core tensor. Tucker decomposition reduces the size of indices of the large tensor with minimal loss of the information. The obtained compressed tensor is the "core" tensor. The number of core tensors ranges from two to the rank of the tensor representation. The number core tensors is a hyperparameter in the neural network.

To perform Tucker decomposition, a single-block attention module is built based on the Tucker decomposition. The Tucker decomposition is a low-rank decomposition method. In the paper "Attention is all you need," arXiv: 1706.03762v7 by Ashish Vaswani et al. a multi-head attention module is a principal part of the Transformer. The multi-head attention module is constructed by a large number of parameters. As set out in the paper, Vaswani et al. computes the multi-head attention module based on a set of queries derived from the input sequence simultaneously. The set of queries is packed together into the query matrix Q, and keys matrices and values matrices are packed together into the key matrix K and the value matrix V, respectively. The multi-head attention module adopts a non-linear function *softmax* over two matrices Q and K.

A non-linear function of the Transformer is difficult to compress. In order to overcome this challenge, the output of the multi-head attention function of the self-attention model is linearly represented by a group of orthonormal basis vectors. After linear representation, a low rank core tensor is initialized using Tucker decomposition. Tucker decomposition reconstructs in a new multi-head attention representation with factor matrices Q, K and V.

A Block-Term Tensor Decomposition (BTD) is used in order to construct the multi-head attention with the factor matrices Q, K and V and in order to compress the language model. The multi-linear attention module uses parameter sharing, for example, sharing factor matrices across multiple blocks. The Block-Term Tensor Decomposition (BTD) is a combination of CP (CANDECOMP/PARAFAC) decomposition and the Tucker decomposition.

The 3-order block tensor reconstructs the scaled dot-product self-attention module in the Transformer by a sum on a particular dimension.

The LLM compression of the present invention accordingly achieves higher compression ratios. The self-attention module (for example, a scaled dot-product attention) in the Transformer is split into the 3-order block tensor (the output of multi-linear attention) which improves accuracy.

It is a known challenge in the prior art that the multi-head attention model cannot be directly integrated into the encoder and the decoder framework of the Transformer. The present invention provides a solution. First, the average of each block tensor is computed. Then, multiple matrices are formed by a tensor split. Then, a concatenation of the multiple matrices is served as an input to the next layer network in Transformer. After performing these three steps, the multi-head attention model can be integrated into the encoder and into the decoder framework of the Transformer and to be trained end-to-end.

The self-attention function can be represented by a linear function, for example, by a linear combination representation of a set of basis vectors.

The output of the self-attention function is represented by a linear combination of the set of the basis vectors:

$$Attention\ (Q, K, V) = (e_1, ..., e_n)M,$$

wherein $e_1, ..., e_n$ are the basis vectors from a vector space S. The basis vectors $e_1, ..., e_n$ are linearly independent and Q, K, V are the factors matrices which are linearly represented by the set of the basis vectors $e_1, ..., e_n$. $M \in R^{n \times d}$ is a coefficient matrix, and (as noted above) d is a dimension of the factor matrices Q, K and V.

A new attention function can be constructed via the Single-block attention module. Using the Single-block attention module, a 3-order diagonal tensor $g$ is initialized. The 3-order diagonal tensor $g$ is a trainable tensor. R is the rank of the tensor. N is the length of the input sequence. The function of the single-block attention module is computed based on the Tucker decomposition:

$$Atten_{TD}(G, Q, K, V) = G \bullet_1 Q \bullet_2 K \bullet_3 V = \sum_{i=1}^{I} \sum_{j=1}^{J} \sum_{m=1}^{M} G_{ijm} Q_i \circ K_j \circ V_m$$

wherein $G$ is the core tensor, $i, j,$ and m are indexes of the core tensor $G$. An operator " o" is the outer product, an operator "$\bullet_z$" is denoted as a tensor-tensor product on the z-th order and $z \in (1, ..., d)$. $Q_i, K_j$ and $V_k$ are column vectors from matrices Q, K, and V, where $Q \in R^{n \times d}$ $K \in R^{n \times d}$ and $V \in R^{n \times d}$. In one non-limiting example, $I=J=M=R$. The core tensor G is defined as follows: $G\_ijm = \begin{cases} rand(0,1) & i = j = m \\ 0 & otherwise \end{cases}$

where the $rand(0,1)$ is a random function, and the diagonal entries of the core tensor G form the vector g. Each entry $g_r \in (0, 1)$, $r \in (1,...,R)$. The vector $g$ is a trainable weight matrix. The trainable weight matrix $g$ can be computed by *softmax* function. The *softmax* function converts a vector of real numbers into a probability distribution.

The output of the single-block attention function is the 3-order tensor which is given by linear computation. Conventionally, compression of the multi-head module is made by multiple groups of linear mappings. In contrast, the present invention uses three linear mappings for the matrices Q, K, and V. At the output of three linear mappings, three factor matrices Q, K, and V are considered to be three factor matrices in reconstructing the multi-linear attention.

FIG. 5 shows the reconstruction of the multi-linear attention. Suppose that $h$ is the number of the multi-head modules and d is the dimension of the factor matrices Q, K, and V. The compression ratios are computed by the following equation: $(3 \times h \times d)/(3 \times d+h)$. In one non-limiting example, the number of the multi-head modules $h$ is set to be eight and the dimension d is set to be 512. In this non-limiting example, the compression ratios achieve eights. In other words, almost eight times parameters are reduced in the attention layer.

The hyperparameters in machine learning are those parameters that are tuneable and are defined by the user to control the machine learning process. The hyperparameters are used to improve the learning of the large language model. The values of the hyperparameters are set before starting the learning process of the large language model. By contrast, the values of other parameters (typically node weights) are derived via training of the language model.

For each core tensor, a location of a physical edge and a way to connect the core tensor to other nodes in the tensor network is chosen. The physical edge is an edge connected to only one node of the tensor network. In one non-limiting example, the nodes are connected in an MPS (Matrix Product State) structure.

Another hyperparameter required from a user is the choice of a maximum virtual edge dimension. The virtual edge is an edge between two nodes of the tensor network. The virtual edge dimension having too large values would disrupt a parameter reduction effect provided by the tensorization process. The virtual edge dimension having too small values may lead to significantly different matrices at the output from the input matrices when the MPS structures are contracted.

An optimal virtual edge dimension for the MPS form should be chosen in order to achieve an optimal algorithm's performance. For example, genetic permutation optimization algorithms can be used to determine the optimal virtual edge dimension of the MPS form. In one non-limiting example, a random search for permutations is used to determine the optimal virtual edge dimension of the MPS form. In machine learning, the random search is a strategy that uses random combinations of the hyperparameters to identify the optimal answer for the established model.

A random search algorithm can involve performing a random permutation on the edges of the nodes of the tensor network. The edges of the nodes can be split into n groups, where $n$ is the number of tensors in the tensor network.

Then, all the physical edges of the tensor network can be merged in one index. This index is a multi-index tensor transformed into a single-index vector. MPS decomposition is then performed.

The initial weight matrix is reconstructed by, firstly, contracting the MPS forms, then by reshaping the MPS forms into the permuted Cartesian form, followed by the step of permuting the edges of the tensor network with reverse of the random permutation and finally by reshaping the Cartesian form to the matrix form.

The difference between the elements of the initial matrix and the reconstructed matrix can then be computed. If the number of parameters is smaller than the number of elements in the initial weight matrix and the largest difference between two factors is smaller than the previous best one, the MPS is saved as the best contraction strategy.

The above steps are repeated m times, where m is an external parameter defined by the user and the best MPS decomposition is defined.

After defining the best MPS decomposition, the tensorized layer is constructed. The best MPS decomposition is a decomposition with the best accuracy possible and less relevant information lost during the compression of the weight layer. The best accuracy in one non-limiting example is equal to 87% of original model with compression to 70% of the original model. In another non-limiting example, the accuracy is equal to 85% of the original model with compressing to 60% of the original model. In yet another non-limiting example, the accuracy is 81% of the original model with compressing to 50% of the original model.

Construction of the tensorized layer can include four steps. In a first step, in order to initialize the tensor layer, the weight matrix is replaced with the tensor network structure to collect the information about the tensorization technique. The information about the tensorization technique enables to reconstruct the initial weight matrix. With the tensor network, the initial weight matrix could be reconstructed with the high accuracy.

In a second step, the tensor layer's parameters are extracted from the Tensor Network structure.

In a third step, the values are removed from the Tensor Network structure in order to free up a memory to avoid keeping unnecessary data..

In a fourth step, the selected technique and biases are initialized according to the input from the user.

The second change in the tensor layer occurs during a feed-forward step. Before a classical forward step, the weight matrix needs to be reconstructed. The reconstruction of the weight matrix provides more efficient strategies for the MPS contraction. For the MPS contraction, the language model parameters need to be reintroduced into the TN. Then the tensor layer is contracted to obtain the weight matrix. After contraction of the tensor layer, the memory of the Tensor Network structure is freed up again to avoid keeping unnecessary data in the memory.

When the tensor network is initialised, the tensorized layer is replaced in the initial language model. Attention has to be paid to allocate the tensorized layer precisely in the place from which the tensor layer has been recycled. In one non-limiting example, the allocation of the tensor layer exactly in the same place is done by conserving the name of the initial module.

At 310, the processor compresses the decomposed weight matrices. Compressing the decomposed weight matrices can involve using a random search algorithm for performing a permutation on edges of nodes of the tensor network. Compressing the decompressed weight matrices can involve truncating indicates of the tensors in the tensor network. The compressed weight matrix can be used for recomputing a new weight matrix for the associated layer. It will be noted that the size of the (re-computed) new weight matrix will be slightly different from the size of an initial (before the decomposition) weight matrix since during the compression as some irrelevant information may be lost.

At 312, the processor stores the tensor network structure in a data storage medium, such as a memory of the hardware system 110. In some embodiments, the processor stores the tensor network structure in a storage medium external to the hardware system 110 and transfers the tensor network structure to the hardware system 110 via a wired connection or over the internet.

At 314 the specialized hardware processor 114 can reconstruct the weight matrix. Reconstructing the weight matrix can involve, at 316, contracting the MPOs and at 406, re-shaping the MPOs into the form of a tensor star.

At 318, the processor reshapes the tensor star back into a matrix form as will be explained in further detail below.

At 322, the processor calculates the difference between the elements of the initial weight matrix and the reconstructed weight matrix to determine whether the reconstructed weight matrix is smaller than the initial weight matrix. This process is repeated a number of times using different permutations and the smallest one of the reconstructed weight matrices is kept. This value will provide an acceptable decomposition.

At 324, the processor replaces the tensorized layer of the LLM with the decomposed layer. The LLM with tensorized layers can correspond to the compressed decision-making model.

Returning to FIG. 2, at 204, the system processor 116 receives sensor data from the sensors 118. In some embodiments, the sensor data can be pre-processed prior to being received by the system processor 116. For example, each sensor can be associated with a processor that can pre-process the sensor data collected by that sensor.

At 206, the system processor 116 preprocesses the sensor data received at 204. Preprocessing the sensor data can involve converting the sensor data so that the sensor data can be used by the decision-making model. Preprocessing the sensor data can include reducing noise in the sensor data, normalizing sensor data values to a standard range and/or extracting features determined to be relevant from the sensor data. The preprocessed sensor data is then transmitted to the specialized hardware processor 114. In some embodiments, sensor data from two or more sensors is combined prior to being transmitted to the specialized hardware processor 114.

At 208, the specialized hardware processor 114 executes the decision-making model to determine a decision for the hardware system 110 based on the preprocessed sensor data. The type of decision can vary, depending on the decision-making model and the application of the hardware system 110. The specialized hardware processor 114 then transmits the decision to the system processor 116 of the hardware system 110. The hardware processor can transmit the decision via an interaction module of the hardware system 110.

In some embodiments, the specialized hardware processor 114 executes multiple decision-making models to determine a decision for the hardware system 110. For example, there may be different decision-making models depending on the type of sensor data and the result of the different decision-making models may be combined to obtain the decision.

At 210, the system processor 116 generates a control signal for implementing the decision. The control signal can be a control signal that causes the hardware system 110 to perform an action. For example, based on a decision to stop a vehicle, the system processor 116 can generate a control signal for the braking system of the vehicle to cause the vehicle to come to a stop. As another example, the system processor 116 can generate a recommendation based on the decision. For example, the system processor 116 can cause a recommendation advising a driver to brake to be displayed on a display of the vehicle. As another example, based on a type of signal received by a satellite, the system processor 116 can generate a control signal to route the signal or route a communication signal to a ground station or to another satellite, or generate a control signal for the satellite to reposition itself. The nature of the control signal can vary depending on the hardware system 110 and/or based on the nature of the sensor data.

In some embodiments, the decision-making model can be specific to the hardware system 110. For example, the decision-making model can be trained using training data specific to the target hardware system 110 and can be trained to make decisions specific to the target hardware system 110. The decision-making model can map an LLM output to a control signal for the hardware system 110 and the industry application module of 124 of the system processor 116 of the hardware system 110 can generate a control signal for a component of the hardware system (e.g., router, actuator, motor, etc.) to effect the control signal.

## Decision-Making System

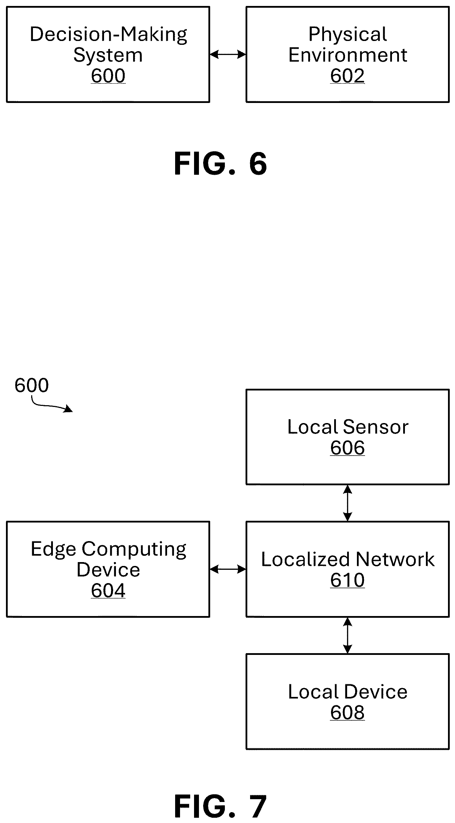

FIG. 6 depicts a decision-making system 600 and a physical environment 602. Decision-making system 600 may interact with physical environment 602, which may include sensing changes or a current state of physical environment 602.

In some embodiments, decision-making system 600 may be located in physical environment 602. In other embodiments, only a portion of decision-making system 600 may be located in physical environment 602, such as sensing or actuator aspects of decision-making system 600. For example, decision-making system 600 may include sensors or devices which may be located inside physical environment 602. In further embodiments, decision-making system 600 may be located remotely from physical environment 602.

Physical environment 602 may be an environment existing in the real or physical world. For example, physical environment 602 may be a residential environment, a vehicular environment, an industrial environment, or some other type of environment. Physical environment 602 may include a home, residential building, commercial building, office building, hospital, apartment, hotel, etc. Physical environment 602 may also include any number of rooms or spaces, such as a kitchen, bedroom, entrance, exit, stairwell, etc. Physical environment 602 may also include spaces situated outside a physical building, such as a door or doorway, deck, porch, balcony, backyard, garden, etc.

Physical environment 602 may include a vehicle, such as a car, truck, recreational vehicle (RV), heavy equipment truck (tow truck, dump truck, concrete mixer, bulldozer, excavator, loader, etc.), agricultural vehicle (tractor, harvester, baler, combine, etc.), trailer, hauler, etc. Physical environment 602 may include the interior of the vehicle, such as a cabin or trunk. Additionally, physical environment 602 may include the environment surrounding the vehicle and any objects in said surroundings. For example, physical environment 602 may include the road, other vehicles, the physical area to either side of the road, signage, traffic lights, etc. Physical environment 602 may also include potential routes of travel, potential destinations, etc. Other means of transportation may also be used in place of a traditional vehicle, such as a boat, submarine, aircraft, plane, helicopter, etc.

Physical environment 602 may include an industrial environment, such as an industrial plant, manufacturing plant or a chemical plant. Physical environment 602 may also include facilities related to power generation, such as a coal plant, nuclear power plant, power station, etc. Physical environment 602 may also include a mining site, such as a mining site for oil, coil, etc. Physical environment 602 may also include an area used for renewable energy generation, such as a solar farm or wind farm. Physical environment 602 may also include farming land, pastures, land designated for agriculture or livestock, etc.

Physical environment 602 may also include any combination of the aforementioned examples. It should also be understood that the above examples are not limiting.

In some embodiments, decision-making system 600 may be implemented using hardware system 110, as discussed above. For example, decision-making system 600 may include specialized hardware processor 114 and sensors 118, as discussed above.

As depicted in FIG. 7, decision-making system 600 includes an edge computing device 604, a local sensor 606, and a local device 608. Decision-making system 600 also includes a localized network 610.

Local sensor 606 and local device 608 may each be deployed in physical environment 602, such as at different locations in physical environment 602. Edge computing device 604 may be deployed in physical environment 610 or may be remote from physical environment 610.

Edge computing device 604, local sensor 606, and local device 608 may communicate each other through a localized network 610. In some embodiments, local sensor 606 and local device 608 may communicate with each other through localized network 610 and edge computing device 604, while in other embodiments local sensor 606 and local device 608 may communicate with one another directly through localized network 610.

Localized network 610 may be a network used to connect devices and/or sensors together in a limited geographic area, such as a Local Area Network (LAN), Bluetooth, CAN bus, Zigbee, etc. Generally, localized network 610 may be disconnected from any external networks, such as the Internet, and so may also be referred to as a private network. However, in some embodiments, localized network 610 may be temporarily connected to an external network (e.g. the Internet) so that decision making system 600 may receive updates. For example, localized network 610 may be temporarily connected to an external network so that edge computing device 604 may retrieve updates for decision-making model 612. After the updates are complete, localized network 610 may be disconnected from the external network. In these embodiments, localized network 610 may not transmit any private, confidential or personal data (e.g. pertaining to a user) from localized network 610 to an external network.

Edge computing device 604 may be a computer, mobile device or other computing device. Edge computing device 604 may include a processor, a memory and a network interface (not depicted). The network interface may allow edge computing device 604 to communicate with local sensor 606 and/or local device 608 over a wired or wireless connection.

In some embodiments, edge computing device 604 may include one or more components of hardware system 110, discussed above. For example, edge computing device 604 may be an example of hardware hosting component 112. Edge computing device 604 may also include one or more specialized hardware processors 114.

With reference to FIG. 7 again, local sensor 606 may be any sensor physically disposed in physical environment 602 or configured to sense or measure physical environment 602. For example, local sensor 606 may be a microphone, camera, pressure sensor, gyroscope, accelerometer, motion sensor, vibration monitor, thermal sensor, temperature sensor, etc. Local sensor 606 may include one sensor or a plurality of sensors.

In some particular examples, local sensor 606 may be a long-range camera or microphone configured to measure physical environment 602 without actually being disposed in physical environment 602, such as a sensor disposed on a satellite.

Local device 608 may be any device physically disposed in physical environment 602 or configured to interact with physical environment 602. For example, local device 608 may be a vehicle component, a household device, a controller, machinery or a sensor. Vehicle component may be a motor, brake, steering wheel, headlights, stereo, sound system, cabin lights, etc. Household device may be a lock, door, window, light, dishwasher, washing machine, dryer, shower, faucet, television, air conditioning unit, furnace, central air unit, fan, etc. Machinery may be a saw, mixer, blender, conveyor, feeder, dust collector, laser cuter, lathe, electric motor, valve, transformer, etc. The sensor may be local sensor 606. The controller may be any type of controller (e.g. a programmable logic controller) used to control an object physically disposed in physical environment 602 or configured to interact with physical environment 602, such as a vehicle component, household device, machinery, sensor, etc. Local device 608 may include one device or a plurality of devices.

Any of edge computing device 604, local sensor 606, and local device 608 may reside in physical environment 602. For example, decision-making system 600 may include a camera (i.e. local sensor 606) situated beside the front door of a house, which may capture a live video feed of the door. In this example, physical environment 602 may be the front entrance of the house. The camera may transfer data associated with the video feed over localized network 610 to an edge computing device 604, such as located in an upper bedroom of the house. Edge computing device 604 may communicate with local device 608, which may include a smart lock on the front door. If the camera feed shows that the front door is unlocked, then instructions may be sent to the smart lock to lock the front door. In this example, the camera and smart lock are located inside of physical environment 602 (i.e. the front entrance of the house) and the edge computing device 604 is located outside of physical environment 602. In other embodiments, edge computing device 604 may also be located inside of physical environment 602. For example, physical environment 602 may include the entire house.

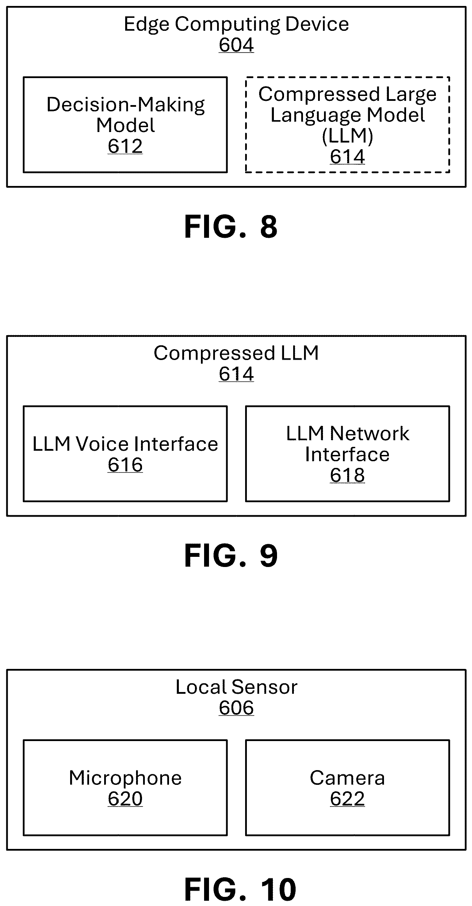

As depicted in FIG. 8, edge computing device 604 may include one or more decision-making models, individually and collectively referred to as decision-making model 612. In some embodiments, decision-making model 612 may be deployed on a specialized hardware processor of edge computing device 604, such as specialized hardware processor 114.

Edge computing device 604 may also include one or more LLM large language models (LLMs). The LLMs may have been compressed to reduce their size, individually and collectively referred to as compressed LLM 614. In some embodiments, decision-making model 612 may include these one or more compressed LLMS, such as compressed LLM 614.

In some embodiments, decision-making model 612 and/or compressed LLM 614 may be compressed using method 300. Decision-making model 612 may also be deployed using method 200, as discussed above.

As depicted in FIG. 9, compressed LLM 614 may include an LLM voice interface 616 and/or an LLM network interface 618. One or both of LLM voice interface 616 and LLM network interface 618 may also be compressed.

LLM network interface 618 may be configured to communicate with local sensor 606 and/or local device 608 over localized network 610, such that LLM network interface 618 may be configured facilitate or allow communication between local device 608 and local sensor 606 over localized network 610. For example, LLM network interface 618 may allow local device 608 and local sensor 606 to communicate with edge computing device 604 over localized network 610. LLM network interface 618 may also be configured to communicate with other local devices or local sensors over localized network 610.

In some embodiments, LLM network interface 618 may be pre-trained or configured to communicate using a variety of different communication protocols, such as Bluetooth, WiFi, Zigbee, CAN bus and/or other communication protocols.

LLM voice interface 616 may be used to interpret voice data received over localized network 610, such as from local sensor 606. For example, if local sensor 606 transmits audio data including voice data to edge computing device 604, LLM voice interface 616 may be used to determine the semantic or literal meaning of the voice data contained in that audio data. For example, LLM voice interface 616 may perform speech-to-text conversion.

As well, LLM voice interface 616 may be used to convert the output of decision-making model 616 or some other module operated by edge computing device 604 into speech or voice output. The voice output generated by LLM voice interface 616 may be sound computer-generated, replicate the voice a user, or be based on a voice template stored on edge computing device 604. The output from LLM voice interface 616 may be transmitted from edge computing device 604 to a local device 608, such as a speaker, which may play or output the output from LLM voice interface 616 to a user.

It will be appreciated that LLM voice interface 616 may receive voice input, such as from a user, and may generate voice output in response to that voice output. In this way, LLM voice interface 616 may be used be edge computing device 606 to conduct a conversation with a user (e.g. a real person), without requiring a connection to an external network, such as the Internet.

Input and output to and from LLM voice interface 616 may be transmitted over localized network 610 used LLM network interface 618.

As depicted in FIG. 10, local sensor 606 may include microphone 620 and/or camera 622. Local sensor 606 may also include other types of sensors, such as a pressure sensor, a gyroscope, an accelerometer, a motion sensor, a vibration monitor, a thermal sensor, a temperature sensor, etc. Local sensor 606 may be one sensor or a plurality of sensors.

Local device 608 may include a speaker, a controller, a motor, electronic or electrical circuitry (such as to control lighting or other hardware), smart devices (such as a controllable door lock, a television, a thermostat, etc.), electronic brakes, an engine, etc. It will be appreciated that local device 608 may include any device which may receive instructions over localized network 610. As noted above, local device 608 may interact with physical environment 602, such as in response to the received instruction.

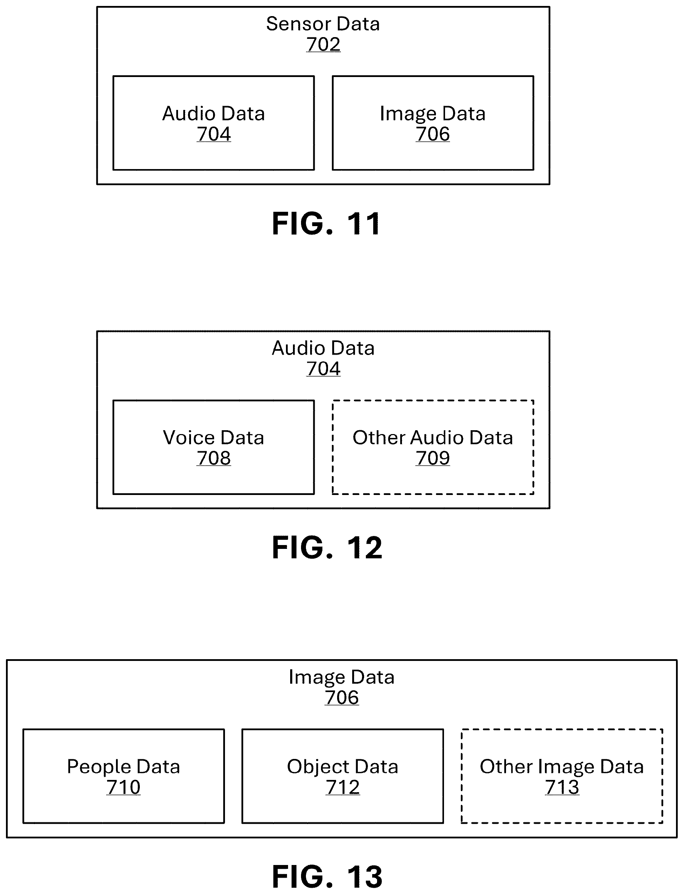

As depicted in FIG. 11, sensor data 702 may include audio data 704 and/or image data 706. Audio data 704 may be captured by microphone 620. Image data 706 may be captured by camera 622. Sensor data may also include other types of sensor data, such as data associated with pressure, temperature, speed, acceleration, velocity, direction, amplitude, frequency, etc. Sensor data 702 may include data from one sensor or a plurality of sensors.

As depicted in FIG. 12, audio data 704 may include voice data 708. For example, audio data may be captured by a microphone in a residential home. Audio data 704 may optionally include other audio data 709, such as other audio or sound data associated with physical environment 602, e.g. the noise of appliances running, doors opening or closing, alarms, people moving, etc.

As noted above, LLM voice interface 616 may be configured to extract voice data 708 from audio data 704. For example, LLM voice interface 616 may receive audio data 704 and may identify voice data 708 present in audio data 704. LLM voice interface 616 may be configured to extract voice data 708 from audio data 704, such as by classifying voice data 708 separately from other audio data 709.

In some embodiments, LLM voice interface 616 may also be configured to match parts or all of voice data 708 with specific people located inside physical environment 602. For example, edge computing device 604 or a local memory connected to localized network 610 may store a database of people who have visited or may visit physical environment 602, and LLM voice interface 616 may match voice data 708 to one or more of those people.

LLM voice interface and/or compressed LLM 614 may also match parts or all of audio data 704 to components of decision-making system 600 and/or physical environment 602. For example, compressed LLM 614 may identify noises, sounds, and/or audio signatures in audio data 704 and match them to objects in physical environment 602. For example, compressed LLM 614 may identify a thud sound followed by a click in audio data 704 and match that sound to a specific door being closed and locked. As noted above, a local memory connected to localized network 610 may store a database of noise types which may occur in physical environment 602, and compressed LLM 614 may match some or all of audio data 704 to one or more of those noise types (e.g. a noise caused by a certain machine).

As depicted in FIG. 13, image data 706 may include people data 710 and/or object data 712. Edge computing device 604 may be configured to receive image data 706 associated with physical environment 602 from local sensor 606. For example, image data 706 may be captured by a camera in a residential home, such as camera 622, and may include data associated with images of rooms, appliances, people, etc. In particular, image data 706 may include people data 710, object data 712 and/or other image data 713. People data 710 may describe people detected in physical environment 602 by camera 622, while object data 712 may describe objects detected in physical environment 602. Other image data 713 may describe events occurring in physical environment 602 (such as an interaction between multiple people or objects), rooms or fixtures in physical environment 602, and/or other data captured by camera 622. It will be appreciated that image data 706 may be still imagery or video imagery.

Edge computing device 604 may be configured to extract people data 710 and/or object data 712 from image data 706, such as using image-recognition or classification methods implemented on edge computing device 604. In some embodiments, decision-making model 612 may be used to extract people data 710 and/or object data 712 from image data 706. In other embodiments, these methods may also involve a different neural network or some other machine learning model, which may or may not be compressed. For example, compressed LLM 614 may be used to classify and/or extract people data 710 and/or object data 712 from image data 706. Classifying and/or extracting people data 710 and/or object data 712 may include classifying other image data 713 in image data 706.

Edge computing device 604 may also be configured to match parts or all of people data 710 with specific people located inside physical environment 602. Edge computing device 604 may also include another module for matching parts or all of people data 710 with specific people located inside physical environment 602. For example, edge computing device 604 may be able to take image data 706 of a large gathering in a residential room and identify each specific person from the image data 706. As a further example, edge computing device 604 may receive image data 706 from local sensor 606 associated with a room in a manufacturing plant. Using the image data 706, edge computing device 604 may recognize types of machinery (e.g. an object) in the room (e.g. laser cutter, milling machine, etc.), individuals in the room, safety equipment, personal protective equipment (PPE), areas marked for specific tasks, areas in which specific PPE is required, etc. For example, edge computing device 604 or a local memory connected to localized network 610 may store a database of people or objects in physical environment 602, and LLM voice interface 616 may match image data 706 to one or more of those people or objects.

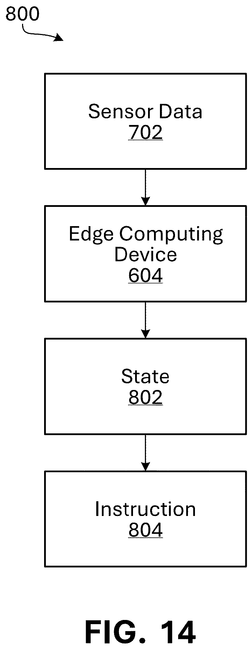

FIG. 14 depicts an example decision-making process 800 performed by decision-making system 600. Decision-making process 800 may generate an instruction 804 for local device 608. In the depicted example, sensor data 702 may be received at edge computing device 604. Edge computing device 604 may determine a state 802 associated with physical environment 602 based on sensor data 702. In determining state 802, edge computing device 604 may use decision-making model 612 and/or compressed LLM 614. In some further embodiments, instruction 804 may be transmitted from edge computing device 604 to local device 608, and local device 608 may interact with physical environment 602 in response to instruction 804.

State 802 associated with physical environment 602 may include a current or future configuration, condition or property of physical environment 602 or an aspect of decision-making system 600. In some embodiments, state 802 may also include past configurations, conditions or properties of physical environment 602 or decision-making system 600. State 802 may be based on data (e.g. audio data 704, image data 706 and/or other sensor data 702) obtained by edge computing device 604. It will be appreciated that 802 may include predictions of current configurations, conditions or properties of physical environment 602 or decision-making system 600 (e.g. of local sensor 606 or local device 608), as well as predictions of future configurations, conditions or properties. In some particular examples, state 802 may include an assessment of a current or future (e.g. predicted) failure of a local device 608 or event in physical environment 602. For example, state 802 may include a current or predicted safety incident associated with physical environment 602 (e.g. occurring within or predicted to occur within physical environment 602).

In some further examples, state 802 may include a determination that a door has been left open or unlocked, that an appliance is (or is not) turned on, that machinery is not operating correctly, that a person is not wearing appropriate PPE in a manufacturing facility, etc. State 802 may also or instead include a determination that a change is required to physical environment 602, local sensor 606, and/or local device 608. For example, state 802 may include a determination that a piece of machinery needs to be shut down, the brakes on a vehicle need to be engaged, a home appliance needs to be turned on/off, lights need to be turned on/off, etc.

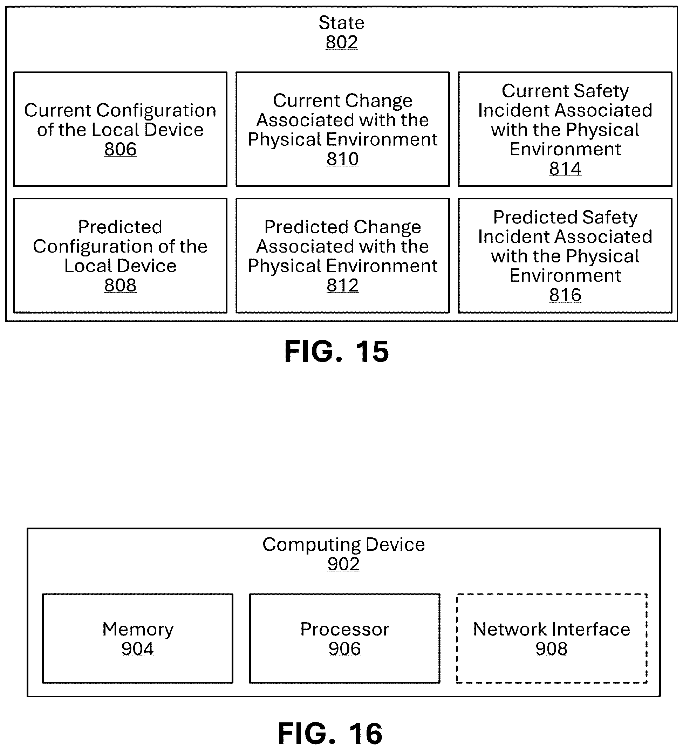

As depicted in FIG. 15, state 802 may include any number or combination of the following states (e.g. assessments, observations or predictions): a current configuration of the local device 806, a predicted configuration of the local device 808, a current change associated with the physical environment 810, a predicted change associated with the physical environment 812, a current safety incident associated with the physical environment 814, and a predicted safety incident associated with the physical environment 816. State 802 may also include other states not listed above.

For example, current configuration of the local device 806 may include or describe whether a home appliance is turned on/off, the position of a vehicle on the road, the direction a camera is pointing, etc. Predicted configuration of the local device 808 may include the predicted location of a vehicle at some future time, the predicted configuration of a valve (open/closed/partially open) at some future time, etc. Current change associated with the physical environment 810 may include a change to the temperature of a room, a change to the speed of a motor, a change in the position of a person, etc. Predicted change associated with the physical environment 812 may include a predicted temperature increase or decrease at some future time, a predicted pressure increase or decrease at some future time, a predicted change of location or direction of an object or person at some future time, etc. Current safety incident associated with the physical environment 814 may include unsafe work conditions (for example, if the temperature/pressure of a piece of machinery is above its normal operating conditions), an incident in which a worker becomes injured, etc. Predicted safety incident associated with the physical environment 816 may include a prediction that, based on the current environmental conditions, physical environment 602 may become unsafe and/or a worker may be injured at some time in the future.

State 802 may be an update to, a supplement to or a replacement of a previous state. For example, a local device 608 may have a certain configuration in physical environment 602 (e.g., a fridge door may be open, the lights in a house may be on, etc.). If the configuration of the device changes (i.e. the fridge door is closed, the lights are turned off, etc.), then state 802 may be updated or replaced to reflect this change. In some examples, this update or replacement may be included in current configuration of the local device 806.

Determination of state 802 by decision-making model 612 may be based on sensor data 702, audio data 704, image data 706, voice data 708, people data 710 and/or object data 712. Other data or considerations may also be used to determine state 802.

After determining state 802, edge computing device 604 may determine an instruction 804 for local device 608 based on state 802. In determining instruction 804, edge computing device 604 may use decision-making model 612 and/or compressed LLM 614.

Instruction 804 may be an instruction for local device 608. For example, instruction 804 may be to turn off a machine, engage the brakes on a vehicle, turn an appliance on/off, turn lights on/off, output audio (e.g. an alarm or a voice command/response), etc. The implementation of instruction 804 may result in a change or modification to physical environment 602. For example, instruction 804 may be sent to a local device in a residential home to turn the furnace on in the home. After the furnace is turned on, the temperature in the residential home may be increased. Instruction 804 may also include instructions to multiple devices.

In some alternate embodiments, it may not be necessary to determine state 802 as part of decision-making process 800. That is, edge computing device 604 may directly determine instruction 804 based on sensor data 702 without determining state 802. In some further alternate embodiments, edge computing device 604 may also determine state 802 after sending instruction 804 (i.e. to evaluate whether instruction 804 was sufficient or whether further instructions are required).

Instruction 804 may be transmitted via localized network 610. In some embodiments, edge computing device 604 may transmit instruction 804 to local device 608.

Local device 608 may include a speaker, and the speaker may be configured to transmit an audio output in response to instruction 804. For example, the audio output may be an instruction for a person to do something (e.g. an instruction for a driver to press the brakes), or a warning about a condition associated with physical environment 602 (e.g. that a piece of machinery is getting too hot and needs to be shut down), etc.

As noted above, edge computing device 604 may be implemented within hardware system 110 and may include specialized hardware process 114. It will be appreciated that edge computing device 604 may also include at least one processor and at least one memory. Edge computing device 604 may also include a network interface. For example, edge computing device 604 may also be implemented using a computing device 902, as depicted in FIG. 16, which may also include one or more components of hardware system 110 (not depicted). Computing device 902 may include a memory 904 and a processor 906. It may also include a network interface 908. Network interface 908 may be used to communicate with local sensor 606 and/or local device 608 using localized network 610.

Processor 906 may be an intel or AMD x86 processor, or an ARM-based processor, FPGA, or any other suitable processor. Processor 906 may also include or be implemented as specialized hardware processor 114 and/or system processor 116.

Memory 904 (e.g. RAM) includes a computer-readable storage space accessible by processor for storage of working data and code. Memory 904 also includes persistent computer-readable storage containing instructions for execution by processor 906 and for storage of data received from local sensor 606 and local device 608. Memory 904 may include any one or more suitable memory types, such as flash memory, hard drives or the like. Memory 904 may also be used to store decision-making model 612 and/or compressed LLM 614.

Network interface 908 may be any suitable wired or wireless device for connecting computing device 902 to a network for communication with a data host. Network interface 908 may be, for example, an Ethernet or IEEE 802.11 (Wi-Fi) network adapter. Network interface 908 may also include a direct connection between local sensor 606 and/or local device 608. In some embodiments, LLM network interface 618 may be an example of network interface 908.

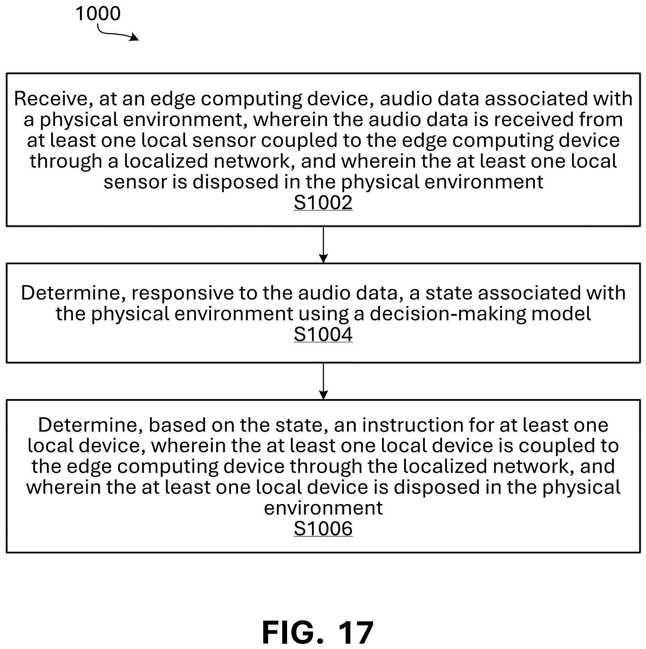

FIG. 17 depicts a method 1000 for determining an instruction for at least one local device, such as instruction 804 for local device 608. Method 1000 may be executed by decision-making system 600, such as by edge computing device 604. Method 1000 may be performed in combination with method 200 and/or method 300, as described above.

At step 1002, edge computing device 604 receives audio data 704 associated with physical environment 602.

For example, the audio data 704 may be received from at least one local sensor coupled to edge computing device 604 through localized network 610. The at least one local sensor may be disposed in physical environment 602. The at least one local sensor may be local sensor 606. It will be appreciated that local sensor 606 may be a microphone.

Edge computing device 604 may receive audio data 704 from local sensor 606 using LLM network interface 616, which may be configured to communicate with local sensor 606 over localized network 610.

In some embodiments, audio data 704 may be extracted from sensor data 702 received from local sensor 606 using, for example, LLM voice interface 616. Sensor data 702 may include other data in addition to audio data 704.

In some embodiments, edge computing device 604 may also receive other data associated with physical environment 602. For example, sensor data 702 received from local sensor 606 may include data from one or more other local sensors in addition to audio data 704. Local sensors may include a microphone, a camera, a pressure sensor, a gyroscope, an accelerometer, a motion sensor, a vibration monitor, a thermal sensor, and/or a temperature sensor.

At step 1004, edge computing device 604 determines, responsive to audio data 704, the state 802 associated with physical environment 602 using decision-making model 612.

State 802 may include, for example, current configuration of the local device 806, predicted configuration of the local device 808, current change associated with the physical environment 810, predicted change associated with the physical environment 812, current safety incident associated with the physical environment 814, and predicted safety incident associated with the physical environment 816 as part of state 802.

In some embodiments, voice data 704 may include voice data 708 and/or other audio data 709.

At step 1006, edge computing device 604 determines, based on state 802, the instruction 804 for at least one local device 608.

The at least one local device may be coupled to edge computing device 604 through localized network 610. The at least one local device 608 may be disposed in physical environment 602.

In some embodiments, determining instruction 804 may also be based on audio data 708, such as voice data 708 and/or other audio data 709.

In some embodiments, method 1000 may include edge computing device 606 transmitting the instruction 804 to the at least one local device 609. Method 1000 may further include the at least one local device 608 performing an action or otherwise interacting with physical environment 602 in response to instruction 804.

In a particular example, local device 608 includes a speaker. The speaker may transmit an audio output in response to instruction 804.

In some embodiments, the at least one local device 608 may include a vehicle component, a household device, a controller, machinery, and/or a sensor.

Method 1000 may also include receiving, at edge computing device 604, image data 706 associated with physical environment 602 from the at least one local sensor. Determining the state 802 associated with physical environment 602 may also be based on image data 706.

In some further embodiments, method 1000 may also include localized network 610 temporarily connecting to an external network (not depicted), such as for edge device 606 to retrieve updates (e.g. software updates) for decision-making model 612. It will be appreciated that sensitive, personal, confidential or otherwise private associated with a user may not be transmitted from edge computing device 604 over external network while localized network 610 is temporarily connected to the external network.

In further embodiments of method 1000, fewer or more steps than steps S1002-S1006 may be performed by edge computing device 604. For example, it may not be necessary to determine state 802 in step S1004. Alternatively, some of steps S1002-S1006 in method 1000 may be performed by other components of decision-making system 600, such as by local device 608.

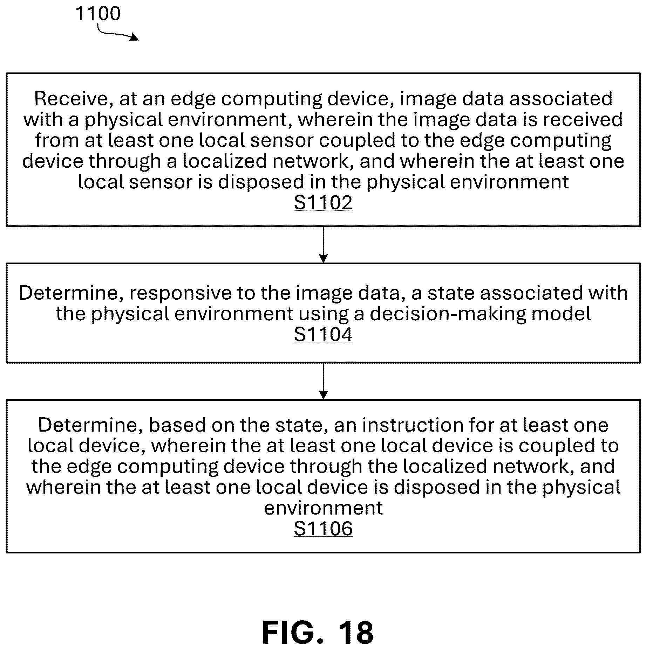

FIG. 18 depicts an alternative method S1100 for determining instruction 804 for at least one local device. Method 1100 may be executed by decision-making system 600, such as by edge computing device 604. In some embodiments method 1100 may be performed in combination with one or more steps of method 1000. Similarly, method 1000 may be performed in combination with one or more steps of method 1100. Method 1100 may also be performed in combination with method 200 and/or method 300, as described above.

At step 1102 of method 1100, edge computing device 604 receives image data 706 associated with physical environment 602.

For example, image data 706 may be received from at least one local sensor coupled to edge computing device 604 through localized network 610. The at least one local sensor may be disposed in physical environment 602. The at least one local sensor may be local sensor 606. It will be appreciated that local sensor 606 may be a camera.

Edge computing device 604 may receive image data 706 from local sensor 606 using LLM network interface 616, which may be configured to communicate with local sensor 606 over localized network 610.

In some embodiments, edge computing device 604 may also receive other data associated with physical environment 602. For example, sensor data 702 received from local sensor 606 may include data from one or more other local sensors in addition to image data 706. Local sensors may include a microphone, a camera, a pressure sensor, a gyroscope, an accelerometer, a motion sensor, a vibration monitor, a thermal sensor, and/or a temperature sensor.

At step 1104, edge computing device 604 determines, responsive to image data 706, the state 802 associated with physical environment 602 using decision-making model 612.

State 802 may include, for example, current configuration of the local device 806, predicted configuration of the local device 808, current change associated with the physical environment 810, predicted change associated with the physical environment 812, current safety incident associated with the physical environment 814, and predicted safety incident associated with the physical environment 816 as part of state 802.

In some embodiments, image data 706 may include people data 710, object data 712 and/or other image data 713. Determining state 802 associated with physical environment 602 may also be based on people data 710 and/or object data 712.

At step 1106, edge computing device 604 determines, based on state 802, the instruction 804 for at least one local device.

The at least one local device may be coupled to edge computing device 604 through localized network 610. The at least one local device may be disposed in physical environment 602. The at least one local device may be local device 608.

In some embodiments, determining instruction 804 may also be based on image data 706, such as people data 710, object data 712, and/or other image data 713.

In some embodiments, method 1000 may include edge computing device 606 transmitting the instruction 804 to the at least one local device 609. Method 1000 may further include the at least one local device 608 performing an action or otherwise interacting with physical environment 602 in response to instruction 804.

In a particular example, local device 608 includes a speaker. The speaker may transmit an audio output in response to instruction 804.

In some embodiments, the at least one local device 608 may include a vehicle component, a household device, a controller, machinery, and/or a sensor.

Method 1000 may also include receiving, at edge computing device 604, audio data 704 associated with physical environment 602 from the at least one local sensor. Determining the state 802 associated with physical environment 602 may also be based on audio data 704.

In some further embodiments, method 1000 may also include localized network 610 temporarily connecting to an external network (not depicted), such as for edge device 606 to retrieve updates (e.g. software updates) for decision-making model 612. It will be appreciated that sensitive, personal, confidential or otherwise private associated with a user may not be transmitted from edge computing device 604 over external network while localized network 610 is temporarily connected to the external network.

It will be understood that in further embodiments, fewer or more steps than steps S1102-S1106 in method 1100 may be performed by edge computing device 604. For example, it may not be necessary to determine state 802 in step S1104. Alternatively, some of steps S1102-S1106 in method 1100 may be performed by other components of decision-making system 600, such as by local device 608.

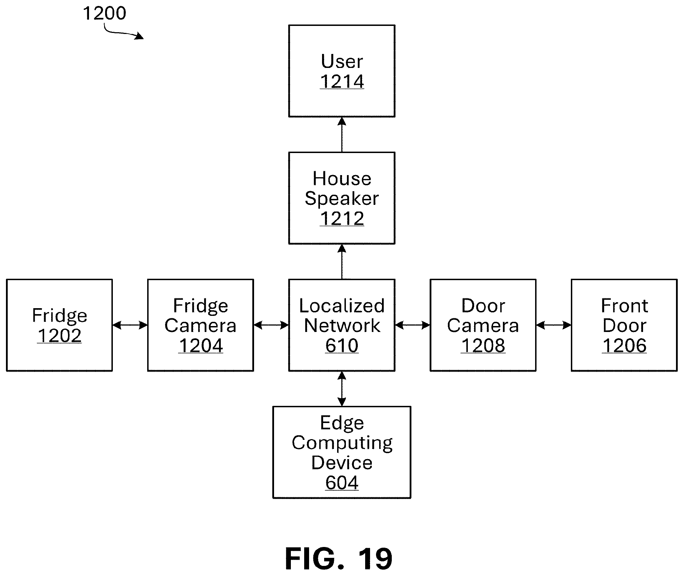

FIG. 19 depicts an example residential system 1200. Example residential system 1200 implements decision-making system 600, according to some embodiments. In the depicted example, physical environment 602 may be a residential environment (e.g. a home). Residential system 1200 may include a fridge camera 1204 disposed inside of a fridge 1202, such to collect image data 706 associated with the food stored within fridge 1202. Residential system 1200 may also include a door camera 1208 directed at a front door 1206, such as to collect image data 706 associated with people entering or leaving the residential environment. Residential system 1200 may further include a house speaker 1212, which may be configured to output data or feedback pertaining to fridge camera 1204 and/or door camera 1208. House speaker 1212 may be a speaker located inside of the house. Residential system 1200 may also include edge computing device 604, which may communicate with fridge camera 1204, door camera 1208 and house speaker 1212 over localized network 610. A user 1214 may also be located within the residential environment. User 1214 may be a person located inside of the house, such as the owner of the house.

In some embodiments, fridge camera 1204 may capture image data 706 associated with the interior of fridge 1202, such as food stored within the fridge. Image data 706 may include object data 712. For example, fridge camera 1204 may capture images showing the food inside of fridge 1202, such as fruit, meat, diary products, etc. These images may be transmitted via localized network 610 to edge computing device 604. Edge computing device 604 may use decision-making model 612 and/or compressed LLM 614 to determine state 802. For example, edge computing device 604 may determine that the fridge is out of milk (or will be out soon) and that more milk should be purchased soon. This determination may be stored within state 802. Based on this state 802, edge computing device 604 may determine an instruction 804 for house speaker 1212 to output an audio command or status update pertaining to the low quantities of milk in the fridge. For example, edge computing device 604 may transmit instruction 804 to house speaker 1212, and instruction 804 may cause house speaker 1212 to transmit an audio output directing user 1214 to purchase more milk next time the user visits a grocery store. In some embodiments, fridge camera 1204 may be part of fridge 1202, and fridge 1202 may send image data 706 captured by fridge camera 1204 to edge computing device 604 via localized network 610.

Similarly, door camera 1208 may send image data 706 to edge computing device 604 showing that front door 1206 has been left open (for example). Edge computing device 604 may determine or update state 802, which may indicate that front door 1206 is open. State 802 may also indicate that this is problematic, as edge computing device 604 may also determine based on image data 706 that the temperature outside front door 1206 is low and warm air may be escaping the residential environment. Edge computing device 604 may determine instruction 804 for house speaker 1212 based on state 802. Instruction 804 may be transmitted to house speaker 1212, which may cause house speaker 1212 to play an audio notification to user 1214 that front door 1206 is open and should be closed.

In further embodiments, example residential system 1200 may also include microphones. For example, audio data 704 collected from a microphone disposed near front door 1206 may collect voice data 708 from people exiting or leaving the residential environment. In the case of front door 1206 being left open, state 802 may also be determined based on this voice data 708. For example, if voice data 708 includes data of a person saying goodbye to other people within the house as the person exits the front door 1206, this may be combined with contemporaneous image data 706 of that person leaving front door 1206 open. As such, state 802 may be determined to reflect that front door 1206 was likely left open accidentally, as the person who left it open was leaving the house.

It will be appreciated that other examples of decision-making system 600 deployed in a residential environment may also be possible, with different examples and configurations of local sensors, local devices and edge computing device 604.

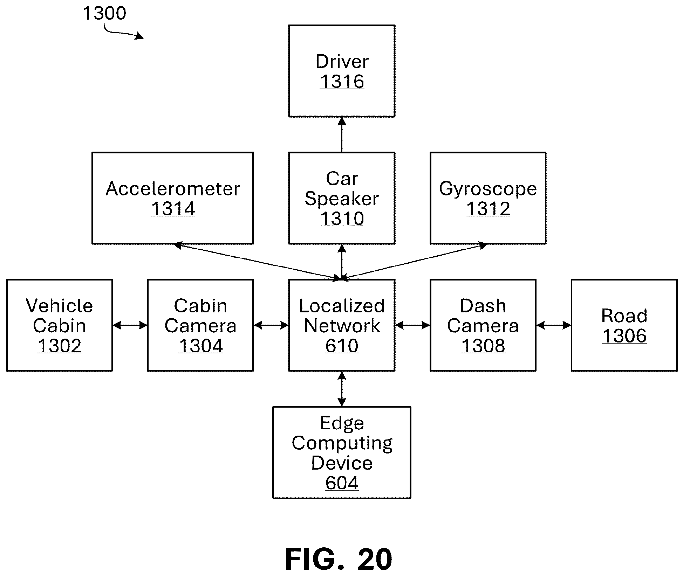

FIG. 20 depicts an example vehicular system 1300. Example vehicular system 1300 implements decision-making system 600, according to some embodiments. In the depicted example, physical environment 602 may be a vehicular environment (e.g. a vehicle, such as a car or a truck). Vehicular environment may also include the immediate surroundings of the vehicle, such as the stretch of road in front of, behind, and on either side of the vehicle. Vehicular system 1300 may include a number of local sensors, including accelerometer 1314, gyroscope 1312, cabin camera 1304, and dash camera 1308. Cabin camera 1304 may capture image data 706 associated with the inside cabin of the vehicle, hereinafter referred to as vehicle cabin 1302. Dash camera 1308 may capture image data 706 associated with road 1306. For example, edge computing device 604 may receive image data 706 from dash camera 1308 showing that an animal (such as a deer, a moose, a bear, etc.) is on road 1306. Using sensor data 702 from accelerometer 1314 and gyroscope 1312, edge computing device 604 may determine that the vehicle is travelling too fast and may collide with the animal at its current rate of speed and trajectory. This determination may be included within state 802 (for example, state 802 may include a predicted safety incident associated with the physical environment 816 and/or predicted change associated with the physical environment 812). Edge computing device 604 may also determine, using image data 706 captured by cabin camera 1304, that driver 1316 is distracted and has not noticed the animal. Edge computing device 604 may send instruction 804 to car speaker 1310 over localized network 610 to play an audio warning to driver 1316. For example, car speaker 1310 may play the following audio warning "Warning! Warning! Animal ahead! Brake recommended."

It will be appreciated that other examples of decision-making system 600 deployed in a vehicular environment may also be possible, with different examples and configurations of local sensors, local devices and edge computing device 604.

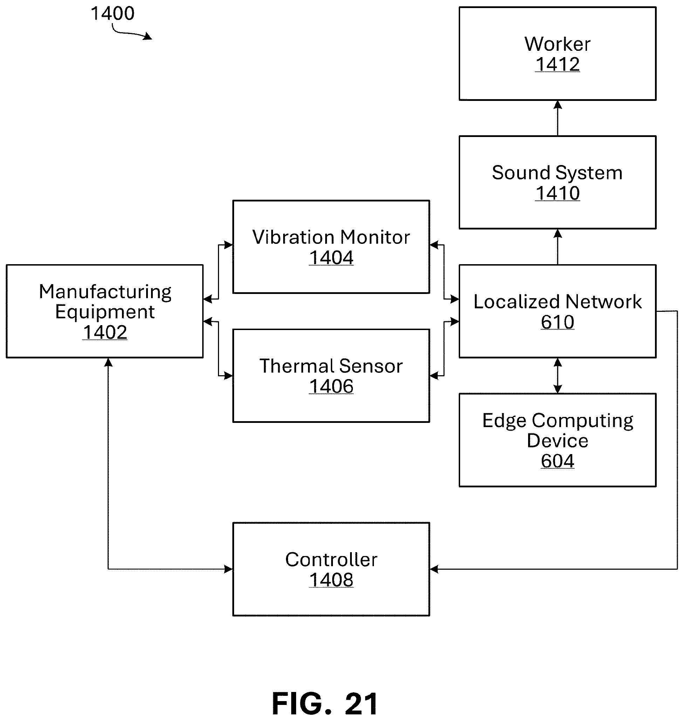

FIG. 21 depicts an example industrial system 1400. Example residential system 1400 implements decision-making system 600, according to some embodiments. In the depicted example, physical environment 602 may be an industrial environment (e.g. a factory or a manufacturing plant). Industrial system 1400 may include a vibration monitor 1404 and a thermal sensor 1406, and each sensor may collect sensor data 702 associated with manufacturing equipment 1402. Manufacturing equipment 1402 may be any type of equipment used during manufacturing processes, such as a drill. For example, thermal sensor 1406 and vibration monitor 1404 may send sensor data 702 via localized network 610 to edge computing device 604 showing the temperature and vibration of the drill. Using this data, edge computing device 604 may determine that the drill is overheating or beginning to vibrate loose from its mechanical fittings, which may be included within state 802. Edge computing device 604 may send instruction 804 to controller 1408 to shut down the drill. Thus, edge computing device 604 may shut down the drill (i.e. manufacturing equipment 1402) itself, without any (or with limited) involvement from a person. Alternatively, edge computing device 604 may use sound system 1410 to notify worker 1412 that the drill should be shut down. Worker 1412 may then shut down the drill. Sound system 1410 may be a sound system located inside the industrial environment, which can be used to notify workers or play alarms/audio.

It will be appreciated that other examples of decision-making system 600 deployed in an industrial environment may also be possible, with different examples and configurations of local sensors, local devices and edge computing device 604.

Note that the expression "at least one of A or B", as used herein, is interchangeable with the expression "A and/or B". It refers to a list in which you may select A or B or both A and B. Similarly, "at least one of A, B, or C", as used herein, is interchangeable with "A and/or B and/or C" or "A, B, and/or C". It refers to a list in which you may select: A or B or C, or both A and B, or both A and C, or both B and C, or all of A, B and C. The same principle applies for longer lists having a same format.

The scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

Any module, component, or device exemplified herein that executes instructions may include or otherwise have access to a non-transitory computer/processor readable storage medium or media for storage of information, such as computer/processor readable instructions, data structures, program modules, and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile disc (DVDs), Blu-ray Disc™, or other optical storage, volatile and non-volatile, removable and non-removable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Any application or module herein described may be implemented using computer/processor readable/executable instructions that may be stored or otherwise held by such non-transitory computer/processor readable storage media.

Memory, as used herein, may refer to memory that is persistent (e.g. read-only-memory (ROM) or a disk), or memory that is volatile (e.g. random access memory (RAM)). The memory may be distributed, e.g. a same memory may be distributed over one or more servers or locations.

**Claims**

1. A system comprising:

    an edge computing device comprising a decision-making model;
    at least one local sensor coupled to the edge computing device through a localized network, wherein the at least one local sensor is disposed in a physical environment;
    at least one local device coupled to the edge computing device through the localized network, wherein the at least one local device is disposed in the physical environment; and
    wherein the edge computing device is configured to:

    receive, from the at least one local sensor, image data associated with the physical environment;
    determine, responsive to the image data, a state associated with the physical environment using the decision-making model; and
    determine, based on the state, an instruction for the at least one local device.

2. The system of claim 1, wherein the edge computing device comprises at least one large language model (LLM), and wherein the at least one LLM is compressed to reduce its size.

3. The system of claim 2, wherein the at least one LLM comprises at least one of:

    an LLM voice interface configured to receive, from the at least one local sensor, audio data associated with the physical environment and extract voice data from the audio data, and wherein determining the state associated with the system is further based on the voice data; or
    an LLM network interface configured to communicate with the at least one local sensor and the at least one local device over the localized network.

4. The system of any of claims 1 to 3, wherein the state associated with the physical environment comprises at least one of a current configuration of the at least one local device, a predicted configuration of the at least one local device, a current change associated with the physical environment, a predicted change associated with the physical environment, a current safety incident associated with the physical environment, or a predicted safety incident associated with the physical environment.

5. The system of any of claims 1 to 4, wherein the edge computing device is further configured to transmit the instruction to the at least one local device.

6. The system of any of claims 1 to 5, wherein the image data describes one or more people or objects located in the physical environment, and wherein determining the state associated with the system is based on identifying the one or more people or objects.

7. The system of any of claims 1 to 6, wherein the at least one local sensor comprises at least one of a microphone, a camera, a pressure sensor, a gyroscope, an accelerometer, a motion sensor, a vibration monitor, a thermal sensor, or a temperature sensor.

8. The system of any of claims 1 to 7, wherein the at least one local device comprises at least one of a vehicle component, a household device, a controller, machinery or a sensor.

9. The system of any of claims 1 to 8, wherein the at least one local device comprises a speaker, and wherein the speaker transmits an audio output in response to the instruction.

10. The system of any of claims 1 to 9, wherein the localized network is temporarily connected to an external network for the edge device to retrieve updates for the decision-making model.

11. A method comprising:

receiving, at an edge computing device, image data associated with a physical environment, wherein the image data is received from at least one local sensor coupled to the edge computing device through a localized network, and wherein the at least one local sensor is disposed in the physical environment;
determining, responsive to the image data, a state associated with the physical environment using a decision-making model; and
determining, based on the state, an instruction for at least one local device, wherein the at least one local device is coupled to the edge computing device through the localized network, and wherein the at least one local device is disposed in the physical environment.

12. The method of claim 11, wherein the edge computing device comprises at least one large language model (LLM), and wherein the at least one LLM is compressed to reduce its size.

13. The method of claim 12, wherein the at least one LLM comprises at least one of:

an LLM voice interface configured to receive, from the at least one local sensor, audio data associated with the physical environment and extract voice data from the audio data, and wherein determining the state associated with the system is further based on the voice data; or
an LLM network interface configured to communicate with the at least one local sensor and the at least one local device over the localized network.

14. The method of any of claims 11 to 13, wherein the at least one local device comprises at least one of a vehicle component, a household device, a controller, machinery or a sensor.

15. One or more non-transitory computer readable media with computer-executable instructions stored thereon that, when executed by at least one computer, cause the at least one computer to perform the method of any of claims 1 to 10.

100

**Hardware System**
**110**

**Hardware Hosting Component**
**112**

| Specialized Hardware Processor **114** | System Processor **116** |

**Sensors**
**118**

## FIG. 1A

120

**System Processor**
**116**

| Data pre-processing module **122** | Industry Application module **124** |

## FIG. 1B

200

```
┌─────────────────────────────────────────┐
│  Deploy compressed decision model on     │ ⌐202
│  hardware processor of hardware system   │
└─────────────────────────────────────────┘
                    │
┌─────────────────────────────────────────┐
│           Receive sensor data            │ ⌐204
└─────────────────────────────────────────┘
                    │
┌─────────────────────────────────────────┐
│         Preprocess the sensor data       │ ⌐206
└─────────────────────────────────────────┘
                    │
┌─────────────────────────────────────────┐
│  Determine a decision for the hardware   │ ⌐208
│  system based on the preprocessed        │
│  sensor data                             │
└─────────────────────────────────────────┘
                    │
┌─────────────────────────────────────────┐
│  Generate a command for the hardware     │ ⌐210
│  system based on the decision            │
└─────────────────────────────────────────┘
```

# FIG. 2

300

Identify a layer of the LLM ~302

Integrate the identified layer into a tensor network ~304

Tensorize the tensor network ~306

Decompose the weight matrices ~308

Compress the decomposed weight matrices ~310

Store the compressed weight matrices ~312

# FIG. 3A

Reconstruct the weight matrix ~314

Contract the matrix product operators ~316

Reshape the matrix product operators ~318

Construct the matrix ~320

Calculate differences in parameters ~322

Replace the tensorized layer of the LLM ~324

# FIG. 3B

**FIG. 4**

**FIG. 5**

Decision-Making
System
600

↔

Physical
Environment
602

# FIG. 6

600

Local Sensor
606

↕

Edge Computing
Device
604

↔

Localized Network
610

↕

Local Device
608

# FIG. 7

Edge Computing Device
604

Decision-Making
Model
612

Compressed Large
Language Model
(LLM)
614

## FIG. 8

Compressed LLM
614

LLM Voice Interface
616

LLM Network
Interface
618

## FIG. 9

Local Sensor
606

Microphone
620

Camera
622

## FIG. 10

Sensor Data
702

Audio Data
704

Image Data
706

## FIG. 11

Audio Data
704

Voice Data
708

Other Audio Data
709

## FIG. 12

Image Data
706

People Data
710

Object Data
712

Other Image Data
713

## FIG. 13

800

Sensor Data
702

Edge Computing
Device
604

State
802

Instruction
804

# FIG. 14

| | State 802 | |
|---|---|---|
| Current Configuration of the Local Device 806 | Current Change Associated with the Physical Environment 810 | Current Safety Incident Associated with the Physical Environment 814 |
| Predicted Configuration of the Local Device 808 | Predicted Change Associated with the Physical Environment 812 | Predicted Safety Incident Associated with the Physical Environment 816 |

## FIG. 15

| | Computing Device 902 | |
|---|---|---|
| Memory 904 | Processor 906 | Network Interface 908 |

## FIG. 16

1000

Receive, at an edge computing device, audio data associated with a physical environment, wherein the audio data is received from at least one local sensor coupled to the edge computing device through a localized network, and wherein the at least one local sensor is disposed in the physical environment
S1002

Determine, responsive to the audio data, a state associated with the physical environment using a decision-making model
S1004

Determine, based on the state, an instruction for at least one local device, wherein the at least one local device is coupled to the edge computing device through the localized network, and wherein the at least one local device is disposed in the physical environment
S1006

FIG. 17

1100

Receive, at an edge computing device, image data associated with a physical environment, wherein the image data is received from at least one local sensor coupled to the edge computing device through a localized network, and wherein the at least one local sensor is disposed in the physical environment
S1102

Determine, responsive to the image data, a state associated with the physical environment using a decision-making model
S1104

Determine, based on the state, an instruction for at least one local device, wherein the at least one local device is coupled to the edge computing device through the localized network, and wherein the at least one local device is disposed in the physical environment
S1106

# FIG. 18

1200

**FIG. 19**

1300

```
                          ┌──────────┐
                          │  Driver  │
                          │   1316   │
                          └──────────┘
                               ▲
                               │
┌──────────────┐      ┌──────────┐      ┌──────────────┐
│ Accelerometer│      │   Car    │      │  Gyroscope   │
│     1314     │      │ Speaker  │      │     1312     │
│              │      │   1310   │      │              │
└──────────────┘      └──────────┘      └──────────────┘
         ▲                 ▲                 ▲
          ╲                │                ╱
           ╲               │               ╱
┌────────┐ ┌────────┐ ┌──────────┐ ┌────────┐ ┌────────┐
│Vehicle │ │ Cabin  │ │Localized │ │ Dash   │ │ Road   │
│ Cabin  │◄►│Camera  │◄►│Network   │◄►│Camera  │◄►│ 1306   │
│ 1302   │ │ 1304   │ │   610    │ │ 1308   │ │        │
└────────┘ └────────┘ └──────────┘ └────────┘ └────────┘
                           ▲
                           │
                      ┌──────────┐
                      │   Edge   │
                      │Computing │
                      │  Device  │
                      │   604    │
                      └──────────┘
```

# FIG. 20

1400

Worker
1412

Sound System
1410

Vibration Monitor
1404

Manufacturing
Equipment
1402

Thermal Sensor
1406

Localized Network
610

Edge Computing
Device
604

Controller
1408

# FIG. 21

## EUROPEAN SEARCH REPORT

**Application Number**

EP 25 22 6231

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUMAILA JAVAID ET AL: "Large Language Models for UAVs: Current State and Pathways to the Future", ARXIV.ORG CORNELL UNIVERSITY LIBRARY, 201 OLIN LIBRARY CORNELL UNIVERSITY ITHACA, NY 14853, 2 May 2024 (2024-05-02), XP091746158, * sections IV and VII; figure 2 * | 1-15 | INV. G06N3/0495 |
| A | ANDREI TOMUT ET AL: "CompactifAI: Extreme Compression of Large Language Models using Quantum-Inspired Tensor Networks", ARXIV.ORG CORNELL UNIVERSITY LIBRARY, 201 OLIN LIBRARY CORNELL UNIVERSITY ITHACA, NY 14853, 25 January 2024 (2024-01-25), XP091677430, * page 1 - page 4; figure 1 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 24 April 2026 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)